(19) Europäisches Patentamt
European Patent Office
Office européen des brevets

(11) **EP 2 512 997 B1**

(12) **EUROPEAN PATENT SPECIFICATION**

(45) Date of publication and mention
of the grant of the patent:
**15.01.2020 Bulletin 2020/03**

(51) Int Cl.:
*C02F 1/70* (2006.01)    *C02F 1/52* (2006.01)
*C02F 1/62* (2006.01)    *C02F 1/28* (2006.01)
*C02F 101/10* (2006.01)    *C02F 101/20* (2006.01)
*C02F 103/06* (2006.01)    *C02F 103/18* (2006.01)
*C02F 103/36* (2006.01)

(21) Application number: **10817988.8**

(22) Date of filing: **20.09.2010**

(86) International application number:
**PCT/US2010/049528**

(87) International publication number:
**WO 2011/035263 (24.03.2011 Gazette 2011/12)**

(54) **Method for removing selenate from an aqueous fluid**

Verfahren zum Entfernen von Selenat aus einem wässrigen Fluid

Méthode pour retirer du sélénate d'un fluide aqueux

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **22.06.2010 US 357466 P**
         **03.06.2010 US 351194 P**
         **18.09.2009 US 243875 P**

(43) Date of publication of application:
**24.10.2012 Bulletin 2012/43**

(73) Proprietor: **The Texas A&M University System
College Station, TX 77843-3369 (US)**

(72) Inventor: **HUANG, Yonheng
College Station, TX 77845 (US)**

(74) Representative: **MacLean, Martin Robert
Mathys & Squire LLP
The Shard
32 London Bridge Street
London SE1 9SG (GB)**

(56) References cited:
**WO-A1-2008/119063    US-A- 5 635 073**

US-A1- 2007 158 275    US-A1- 2007 241 063
US-A1- 2009 191 084    US-B1- 6 322 701

• KANEL S ET AL: "Removal of Arsenic(III) from Groundwater by Nanoscale Zero-Valent Iron", ENVIRONMENTAL SCIENCE & TECHNOLOGY, AMERICAN CHEMICAL SOCIETY, vol. 39, no. 5, 1 March 2005 (2005-03-01), pages 1291-1298, XP008161461, ISSN: 0013-936X, DOI: 10.1021/ES048991U [retrieved on 2005-01-06]
• Yong H. Huang ET AL: "Effects of Oxide Coating and Selected Cations on Nitrate Reduction by Iron Metal", JOURNAL OF ENVIRONMENTAL QUALITY, 1 January 2003 (2003-01-01), pages 1306-1315, XP055080834, Retrieved from the Internet: URL:http://digitalcommons.unl.edu/cgi/view content.cgi?article=1022&context=civilengf acpub [retrieved on 2013-09-24]
• KANEL, S.R. ENVIRON. SCI. TECHNOL. vol. 39, no. 5, January 2005, pages 1291 - 1298, XP008161461
• LIU C C ET AL: "Effects of ferrous ions on the reductive dechlorination of trichloroethylene by zero-valent iron", JOURNAL OF HAZARDOUS MATERIALS, ELSEVIER, AMSTERDAM, NL, vol. 136, no. 3, 25 August 2006 (2006-08-25), pages 706-713, XP027884555, ISSN: 0304-3894 [retrieved on 2006-08-25]

**Description**

**FIELD OF THE INVENTION**

The present invention relates to remediation of contaminated fluids.

**BACKGROUND**

It is common to treat various sources of liquids in order to remove contaminants. Examples of sources of liquids for treatment include surface water, ground water, and industrial waste streams. Industrial waste stream refers to liquid streams of various industrial processes. An industrial waste stream may be produced at any stage of a process. The waste stream may be wastewater, which herein refers to a primarily water-based liquid stream.

Wastewater treatment is one of the most important and challenging environmental problems associated with coal-based power generation. Using wet scrubbers to clean flue gas is becoming more popular worldwide in the electrical power industry. In the coming years, hundreds of wet scrubbers will be installed in the US alone. While wet scrubbers can greatly reduce air pollution, toxic metals in the resulting wastewater present a major environmental problem. The industry prepares to invest billions of dollars in the next decade to meet the ever more stringent environmental regulations; unfortunately, a cost-effective and reliable technology capable of treating such complicated wastewater is still not available.

The compositions of FGD wastewaters vary greatly, depending not only on the types of coal and limestone used but also on the types of scrubber and processes used. Pretreatment method and management practices also affect wastewater characteristics. According to a recent survey by EPRI (2006), untreated raw FGD wastewater could have TSS in ~10,000 mg/L but after settlement, it falls to ~10 mg/L; the pH typically falls in 5.8-7.3; sulfate is in the range of 1,000-6,000 mg/L; nitrate-N at level of 50 mg/L is not uncommon; chloride, alkalinity and acidity vary from hundreds to thousands ppm; selenium exists in various forms, ranging from dozens of ppb to over 5 ppm, among which, selenate could account for more than half of total Se; arsenic ranges from a few ppb to hundreds of ppb; mercury ranges from below 1 ppb to hundreds of ppb; and boron can be as high as hundreds of ppm.

It is desirable, for example, to remove selenium from wastewater. Treatment of selanate-Se in wastewater is often considered to be one of the most difficult in toxic metal treatments. Selenium is a naturally occurring chemical element in rocks, soils and natural waters. Although Se is an essential micronutrient for plants and animals, it can be toxic at elevated levels and some of Se species may be carcinogenic. The hexavalent selenium is stable in oxic environments and exists as the selenate ($SeO_4^{2-}$) anion, which is weakly sorbed by mineral materials and generally soluble. Tetravalent Se is the stable valence state under mildly reducing or anoxic condition (0.26 V < Eh < 0.55 V at pH 7). It exists as the selenite ($SeO_3^{2-}$) anion, which tends to be bound onto mineral surfaces (e.g., Fe and Mn oxides). Selenate and selenite are more toxic due to their high bioavailability than elemental selenium or metallic selenides.

Further, for example, it is desirable to remove mercury from wastewater. In particular, the future EPA guideline for total mercury is < 12 part per trillion (ppt) or ng/L. Metal sulfide chemistry is well understood and has been used in various ways in water treatment system to achieve reduction of dissolved toxic metals from water. For example, organosulfide has been used as a water treatment reagent to precipitate Hg and other toxic metals in water industry. Iron sulfide materials ($FeS$ or $FeS_2$ ores) have been used as adsorbent for toxic metals removal. Conventional sulfide-based toxic metal removal technology has not been able to achieve the desired mercury removal level in many applications. For example, direct application of organosulfide has been found unable to achieve Hg removal below 12 ppt in the treated effluent that is required by the new federal or local EPA guideline.

A biological treatment system, ABMet, has been patented and is being marketed by GE Water.

Kanel et al (2005), Environmental Science & Technology, American Chemical Society, 39, 5, 1291-1298 describes removal of arsenic(III) from groundwater by nanoscale zero-valent iron.

US 5,635,073 A describes a method for the purification of metal-containing aqueous media and a method of preparing an adsorbent.

US 2009/191084 A1 describes reactive atomized zero valent iron enriched with sulphur and carbon to enhance corrosively and reactivity of the iron and provide desirable reduction products.

Yong et al (2003), Journal of Environmental Quality, 1306-1315 describes the effects of oxide coating and selected cations on nitrate reduction by iron metal.

US 6,322,701 B1 describes a process for the treatment of waste waters containing, chemically reducible dissolved organic and inorganic pollutants and suspended matter in particulate or colloidal form. Liu et al (2006), Journal of Hazardous Materials B136, 706-713 describes the effects of ferrous ions on the reductive dechlorination of trichloroethylene by zero-valent iron.

However, there remains a need for a cost-effective and reliable treatment process for removing a contaminant from an aqueous fluid.

## SUMMARY

The invention is defined by the claims.

Compositions, systems and processes for treating an aqueous fluid so as to reduce the concentration of a contaminant are described herein. The compositions, systems and processes are robust, flexible, and based on cost-effective materials. The disclosure relates to a chemical treatment process that can cost-effectively treat all major pollutants in the flue gas desulfurization (FGD) wastewater in a single process.

A fluidized reacting system using a hybrid reactive solid/secondary reagent reactor that can cost-effectively remove many toxic metals from wastewater is described herein. The system and process are effective to treat an aqueous suspension. The system uses a reactive solid and a secondary reagent as reactive agents to rapidly reduce selenate to become insoluble selenium species, which are then adsorbed or precipitated along with various of other toxic metals (such as As and Hg, if present) in wastewater onto the iron oxide sludge. The system is particularly effective for removing selenate-Sc.

In one aspect the present invention provides a method for removing selenate from an aqueous fluid, the method comprising:

providing a fluidized bed reactor (110) comprising a reactive solid (122) in the form of a plurality of particles and a secondary reagent (126);

contacting the reactive solid (122) and the secondary reagent (126) with the aqueous fluid, thereby reducing the selenate to an insoluble selenium species;
wherein the reactive solid (122) particles comprise:

a core including primarily zero valent iron; and
a shell including primarily magnetite;

wherein the reactive solid (122) is made by a method comprising:

oxidising a portion of zero valent iron so as to produce an iron corrosion product; and
exposing the iron corrosion product to the secondary reagent (126) so as to produce the reactive solid (122) comprising the remaining zero valent iron and magnetite;

wherein the secondary reagent (126) is ferrous iron, which is added as dissolved ferrous iron, and appropriate aqueous chemical conditions are maintained so as to facilitate the formation and maintenance of the magnetite, so that the reactivity of the zero valent iron can be sustained.

The disclosure relates to a composition, system and process involving a composite for removing a contaminant from a fluid stream, where the composite comprises zero valent iron, an iron oxide mineral, and ferrous iron, wherein the ferrous iron is disposed so as to facilitate maintenance of the iron oxide mineral, and wherein the composite is active for removing the contaminant from the fluid stream.

The process is effective for removing almost all toxic metals in an aqueous suspension; in addition, it can remove oxyanion pollutants and metalloids. More particularly, contaminants removable by the present system and process are: most toxic metals such as arsenic, mercury, selenium, cobalt, lead, cadmium, chromium, silver, zinc, nickel, molybdenum, and the like; metalloid pollutants such as boron and the like; many oxyanion pollutants, such as nitrate, bromate, iodate, and periodate, and the like, and combinations thereof.

The process uses common, non-toxic, and inexpensive chemicals. The chemical treatment system costs much less to construct and operate than biological treatment systems, which tend to be more complex.

The process is versatile and flexible. The system and process are more robust and manageable than a biological process when exposed to toxic chemicals or any disturbances and changes in wastewater quality and quantity.

## BRIEF DESCRIPTION OF DRAWINGS

The foregoing summary as well as the following detailed description will be better understood when read in conjunction with the appended drawings. It should be understood, however, that the present invention is not limited to the precise arrangements and instrumentalities shown herein. The components in the drawings are not necessarily to scale, emphasis instead being placed upon clearly illustrating the principles of the present invention. Moreover, in the drawings, like reference numerals designate corresponding parts throughout the several views.

The invention may take physical form in certain parts and arrangement of parts. For a more complete understanding of the present invention, and the advantages thereof, reference is now made to the following descriptions taken in conjunction with the accompanying drawings, in which:

Figure 1 is a schematic illustrating a single-stage fluidized bed reactor;
Figure 2 is a flow chart illustrating a three-stage reaction system; and
Figure 3 is a schematic illustrating a single-stage fluidized bed ZVI/FeOx/Fe(II);
Figure 4 is a flow-chart of a hybrid ZVI/FeOx/Fe(II) prototype treatment system incorporating a sulfide generator;
Figure 5 is a schematic illustrating treatment of groundwater;
Figures 6A, 6B, 6C, and 7 are SEM micrographs of ZVI/FeOx/Fe(II) particles;
Figure 8 shows a cartoon of formation of particles with and without $Fe^{2+}$;
Figure 9 illustrates an iron corrosion model of ZVI/FeOx/Fe(II) particles;

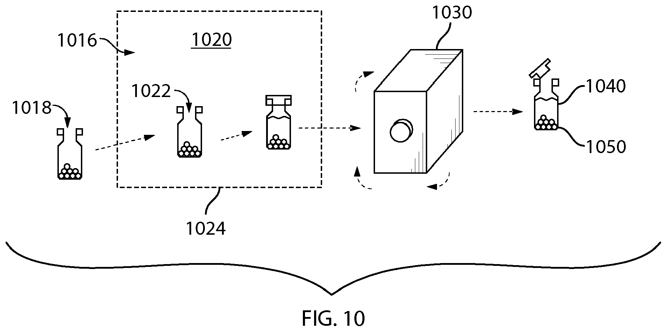

Figure 10 is schematic of batch testing of ZVI/FeOx/Fe(II) particles.
Figure 11 shows data illustrating removal of selenate-Se from FGD wastewater by a treatment system containing ZVI/FeOx/Fe(II) particles; and
Figure 12 shows data illustrating removal of total mercury over time from FGD wastewater by a treatment system containing ZVI/FeOx/Fe(II) particles.

## DETAILED DESCRIPTION

In the present description and claims, it will be understood that all numbers are approximate within convention as understood by one of ordinary skill in the art. That is, for example, 9 is to be understood as about 9, and likewise for other numbers.

A system for treating wastewater is described herein, which can be used to implement a method according to the invention. It will be understood that wastewater is illustrative of an aqueous fluid. For example, the present inventor contemplates treating oil refinery waste. Further, the present inventor contemplates treating wetlands. The aqueous fluid may be a suspension.

Experiments have demonstrated the system operable for removal of selenium present as selenate. In addition, other common toxic materials are contemplated. Removing metals such as arsenic, mercury, cobalt, lead, cadmium, chromium, silver, zinc, nickel, molybdenum, and the like; metalloid pollutants such as boron and the like; and many oxyanion pollutants, such as nitrate, bromate, iodate, and periodate, and the like is described herein.

A fluidized bed reactor for use in the claimed method includes a reactive solid. The reactive solid includes primarily zero valent iron and a supplementary material, which is magnetite.

The supplementary material may assist the functionality of the base material. The reactive solid is in the form of a plurality of particles. A reactive solid particle comprises a core and a shell. The core includes primarily zero valent iron. The shell includes primarily the supplementary material magnetite. The shell may be continuous. Alternatively, the shell may be discontinuous. The shell includes a plurality of particles of the supplementary material.

According to some embodiments a fluidized bed reactor system for use in the claimed method includes a secondary solid. The secondary solid may assist the functionality of the reactive solid. The secondary solid may be in the form of particles. Thus, the reactor system may include a plurality of reactive solid particles and a second plurality of secondary solid particles. The secondary solid may be in equilibrium with the reactive solid. The secondary solid may include the same material as the supplementary material. Thus, the secondary solid may include magnetite.

According to some embodiments, a fluidized bed reactor system for use in the claimed method includes an additive solid. The additive solid may include a material promoting mercury removal. The material may be an iron sulfide. An iron sulfide may be selected from among FeS, $FeS_2$, and combinations thereof. The iron sulfide may be pyrite.

A fluidized bed reactor system for use in the claimed method further includes a secondary reagent. The secondary reagent is ferrous iron. The ferrous iron may be present as ferrous ion.

The present inventor believes that ferrous iron acts as a passivation reversal agent for zero valent iron. Thus, the secondary reagent may be adapted to act as a passivation reversal agent. Thus, according to some embodiments, the reactive system further includes a passivation reversal agent suitable for a zero valent reactive solid as may be advantageous. Passivation is generally the process of rendering an active material, for example zero valent zinc, inactive.

The mechanism of action is complex. While not wishing to be limited by theory, the present inventor believes that passivation is partially caused by corrosion of iron in a water environment. The present inventor believes that ferrous iron acts to cause conversion of iron corrosion product on the surface of the zero valent iron to magnetite. The present inventor believes that boron and dissolved silica in the wastewater further contributes to passivation of zero valent iron and that ferrous iron facilitates removal of the boron and dissolved silica from the zero valent iron reactive system.

It is described herein that a sufficient amount of magnetite is produced so as to optimize removal of toxic materials by a reaction system including zero valent iron.

A process that uses a highly reactive mixture of zerovalent iron ($Fe^0$), iron oxide minerals (FeOx), and ferrous iron ($Fe^{II}$) to react with, absorb, and precipitate various toxic metals and metalloids from wastewater, forming chemically inert and well crystallized magnetite ($Fe_3O_4$) particles that can be separated from water and disposed with encapsulated pollutants is described herein. The process as claimed may produce removable solids. The removable solids may contain encapsulated toxic material. The encapsulated toxic material may be solid.

The removable solids may contain toxic material encapsulated in magnetite.

According to some embodiments, a fluidized bed reactor system for use in the claimed method further includes an additive. The additive may be in the form of an additive solid. The additive solid may include iron sulfide. Alternatively, or in combination, the additive may be in the form of an additive reagent
in solution. The additive reagent may include sulfide ion. The additive reagent may be adapted to promote the removal of mercury.

It will be understood that mercury is illustrative of toxic metals whose removal may be improved with the addition of a sulfur-containing species, such a sulfide ion or iron sulfide. In particular, a sulfur-containing additive may be adapted to promote the removal of mercury, lead, copper, cadmium, zinc, and the like. It will be understood that improvement with a sulfur-containing additive is illustrative of improvement of removal of a contaminant with addition of an additive, as disclosed further herein.

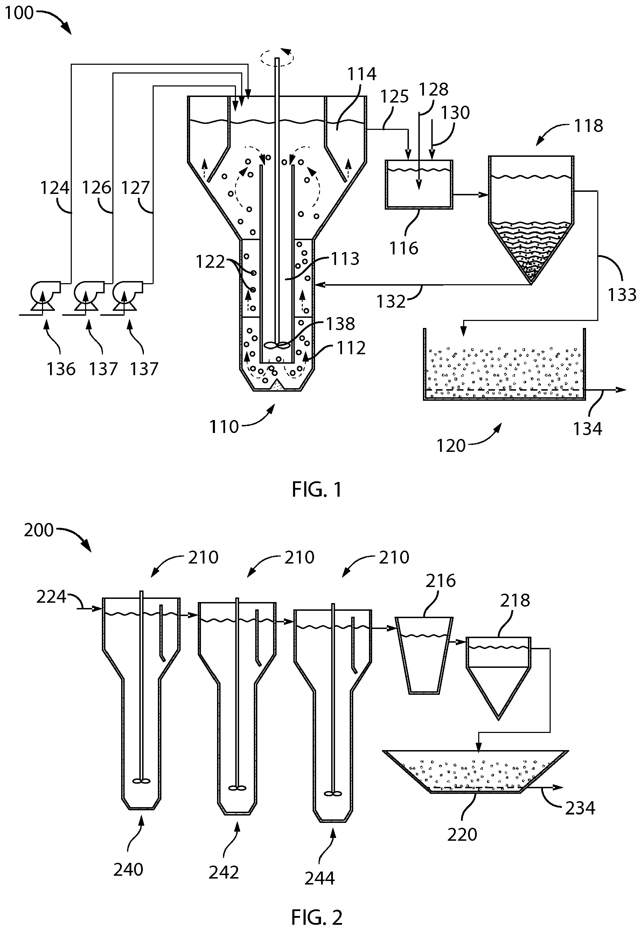

Referring to Figure 1, reactor 110 may include internal settling zone 114 in communication with a reactive zone 111. The reactor is illustrated in schematic in FIG. 1. Reactive zone 111 may be maintained near neutral pH. Internal settling zone 114 may use gravitational forces to separate solids from liquids. Mostly liquids may remain in settling zone 114. Internal settling zone 114 may be towards the top of reactor 110 (FIG. 1). Communication with reactive zone 111 may be via inlet 115 at the bottom of the internal settling zone 114.
Effluent 125 may be removed from the top region of internal settling zone 114.

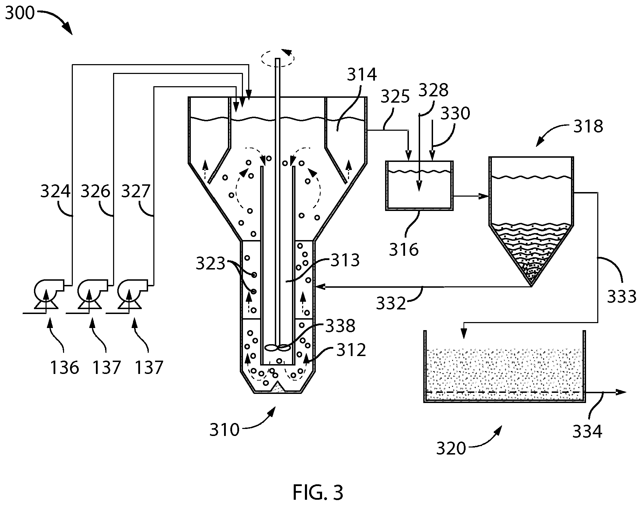

The effluent may be very clear. It will be understood that a clear effluent is illustrative of an effluent substantially free of removable solids. As disclosed herein, removable solids may contain magnetite. Magnetite is known to be black. Settling observed in an experiment over time is illustrated in Figure 3 of the document "pilot test scale plan" appended to U.S. Provisional Application Serial Number 61/243,875, filed September 18, 2009, which shows clearer separation of black material and clear fluid over time. The present inventor believes that settling for a separating method is particularly efficient. However, other suitable separating methods are contemplated.

Still referring to Figure 1, reactive zone 111 may include central conduit 113. Central conduit 113 improves mixing. For example,
Central conduit 113 may promote convective motion.

Still referring to Figure 1, the reactor system 100 may operate in part as a fluidized bed reactor 110 that employs motorized stirrer 138 in conjunction with central flow conduit 113 to create circular flow 119 within reactor 110 and provide an adequate mixing between reactive solids 122 and wastewater 124. Internal settling zone 114 was created to allow solid-liquid separation and return of the solid into fluidized zone 112. It will be understood that as used herein the terms "fluidized bed reactor" is defined to refer to reactor that provides a flow of reactive solids within the reactor so as to provide adequate mixing between reactive solids and wastewater. According to some embodiments, the fluidized bed reactor for use in the claimed method includes a stirrer and operates similarly to a stirred tank reactor. According to some embodiments, flow is created by a conventional method known to one of ordinary skill in the art for creating flow in a fluidized bed reactor and the reactor operates with a conventional fluidized bed.

FIG. 1 is a schematic illustrating the system and process of the disclosure. Single-stage fluidized-bed system 100 includes fluidized reactive zone 112, an internal solid/liquid separating zone 114, an aerating basin 116, final settling basin 118, and optional sand filtration bed 120.

Still referring to FIG. 1, fluidized zone 112 is the main reactive space where reactive solid 122, in the form of particles, is completely mixed with wastewater 124 and secondary reagent 126 and where various physical-chemical processes responsible for toxic metal removal occur.

Still referring to FIG. 1, internal settling zone 114 is to allow particles to separate from water and be retained in fluidized zone 112. For high density particles, an internal settling zone with a short hydraulic retention time is sufficient for complete solid/liquid separation. This eliminates the need of a large external clarifier and a sludge recycling system.

Still referring to FIG. 1, aeration basin 116 has two purposes: (1) to eliminate residual secondary reagent in effluent 125 from fluidized zone 112; and (2) to increase the dissolved oxygen level. For a single-stage reactor, effluent from fluidized reactive zone will always contain certain amount of secondary reagent. Oxidation of secondary reagent will consume alkalinity and therefore will lower the pH. To accelerate oxidation of secondary reagent, aeration basin 116 should maintain a pH of above 7.0. Chemicals such as $Ca(OH)_2$, NaOH, and $Na_2CO_3$ could be used for pH control.

Still referring to FIG. 1, final settling tank 118 is to remove flocculent formed in aeration basin 116. The floc (fluffy) settled to the bottom can be returned as returned sludge 132 to fluidized zone 112 and transformed by secondary reagent 126 into dense particulate matter.

Still referring to FIG. 1, upon final settling, sand filtration bed 120 may be used to further polish the intermediate treated water 133 before discharge as treated water 134.

Still referring to FIG. 1, the post-FBR (fluidized bed reactor) stages (aeration-settling-filtration) may not be needed under certain operation conditions.

Still referring to FIG. 1, shown also are wastewater pump 136, reagent pumps 137, auxiliary reagent 127 (e.g. HCl), air 128, and pH control chemical 130.

Referring now to FIG. 2, several fluidized-bed reactors 210 can be combined to form a multi-stage treatment system 200. It is recommended that each stage maintain its own reactive solid. That is, the solids are separated in each stage. In order to achieve a separate solid system, each stage may have its own internal solid-liquid separation structure.

Still referring to FIG. 2, depending on operating conditions in FBRs 240, 242, 244, wastewater 224 characteristics, and discharge 234 standards, the post FBR treatments (aeration 216 + final clarifier 218 + sand filtration 220) may not be needed.

Although a multi-stage system is more complex and may result in a higher initial construction cost, a multi-stage fluidized-bed reactor system has several major advantages.

A multi-stage system can achieve higher removal efficiency than a single-stage system under comparable conditions. Further, the FGD wastewater may contain certain chemicals (e.g., phosphate and dissolved silica) that may be detrimental to the high reactivity of the reactive solids. A multi-stage system can intercept and transform these harmful chemicals in the first stage and thus reducing the exposure of the subsequent stages to the negative impact of these detrimental chemicals. As such, a multi-stage configuration is more stable and robust.

A multi-stage configuration facilitates the control of nitrate reduction, for example in an iron-based system. In a single stage system, because the presence of dissolved oxygen carried in raw wastewater, it tends to be difficult to operate the system in a rigorous anaerobic environment. In a multi-stage system, stage 1 can remove virtually all dissolved oxygen; as a result, the subsequent stages can be operated under rigorous anaerobic environment.

A multi-stage system allows flexible control of different chemical conditions in each individual reacting basin. The chemical conditions in each reactive basin can be controlled by adjusting the pumping rate of supplemental chemicals and turning aeration on or off. A multi-stage system can be operated in a mode of multiple feeding points. Each stage may be operated under different pH and dissolved oxygen condition.

A multi-stage system will lower chemical consumption. In a single-stage complete-mixed system, secondary reagent in the reactor is desirably maintained at a relatively high concentration in order to maintain high reactivity of reactive solids. As a result, the residual secondary reagent in the effluent will be high. This means that more secondary reagent will be wasted and more NaOH (or lime) consumption will be required just to neutralize and precipitate the residual secondary reagent in the effluent. As a result, more solid sludge will be produced and waste disposal cost will increase. In a multi-stage system, residual secondary reagent from stage 1 can still be used in stage 2. In this case, secondary reagent can be added in a way that conforms to its actual consumption rate in each stage. As a result, it is possible to control residual secondary reagent in the effluent in the final stage to be much lower than the one in a single stage system.

Referring to FIG. 3, in the system and process illustrated by FIG. 1, the reactive solid 323 may include zero valent iron (ZVI) and iron oxide mineral (FeOx), and the secondary reagent is $Fe^{2+}$. Thus, referring to FIG. 3, single-stage fluidized-bed ZVI/FeOx/Fe(II) system 300 includes a fluidized reactive zone 312, an internal solid/liquid separating zone 314, an aerating basin 316, a final settling basin 318, and an optional sand filtration bed 320.

Still referring to FIG. 3, fluidized zone 312 is the main reactive space where ZVI and FeOx reactive solids are completely mixed with wastewater 324 and dissolved $Fe^{2+}$ 326 and where various physical-chemical processes responsible for toxic metal removal occur.

Still referring to FIG. 3, internal settling zone 114 is to allow ZVI and FeOx to separate from water and be retained in fluidized zone 112. Because of high density of fully or partially crystallized FeOx particles, an internal settling zone with a short hydraulic retention time would be suffice for complete solid/liquid separation. This eliminates the need of a large external clarifier 318 and a sludge 332 recycling system.

Still referring to FIG. 3, aeration basin 330 has two purposes: (1) to eliminate residual dissolved $Fe^{2+}$ in the effluent from fluidized zone; and (2) to increase dissolved oxygen level. For single-stage reactor 310, effluent from fluidized reactive zone 312 will always contain certain amount of dissolved $Fe^{2+}$. Oxidation of $Fe^{2+}$ will consume alkalinity and therefore will lower the pH. To accelerate oxidation of dissolved $Fe^{2+}$, aeration basin 316 should maintain a pH of above 7.0. Chemicals such as $Ca(OH)_2$, NaOH, and $Na_2CO_3$ could be used for pH control.

Still referring to FIG. 3, final settling tank 318 is to remove iron oxide flocculent formed in aeration basin 316. The ferric oxide floc (fluffy) settled to the bottom can be returned as returned sludge 332 to the fluidized zone 312 and transformed by $Fe^{2+}$ into dense particulate matter.

Still referring to FIG. 3, upon final settling, sand filtration bed 320 may be used to further polish the treated water before discharge.

Still referring to FIG. 3, reactive solid 323 may initially be zero valent iron, with the iron oxide mineral formed in situ. The iron oxide mineral may coat the zero valent iron. Reactive solid 323 is in the form of particles.

Still referring to FIG. 3, shown also are wastewater pump 336, reagent pumps 337, auxiliary reagent 327 (e.g. HCl), air 328, and pH control chemical 330.

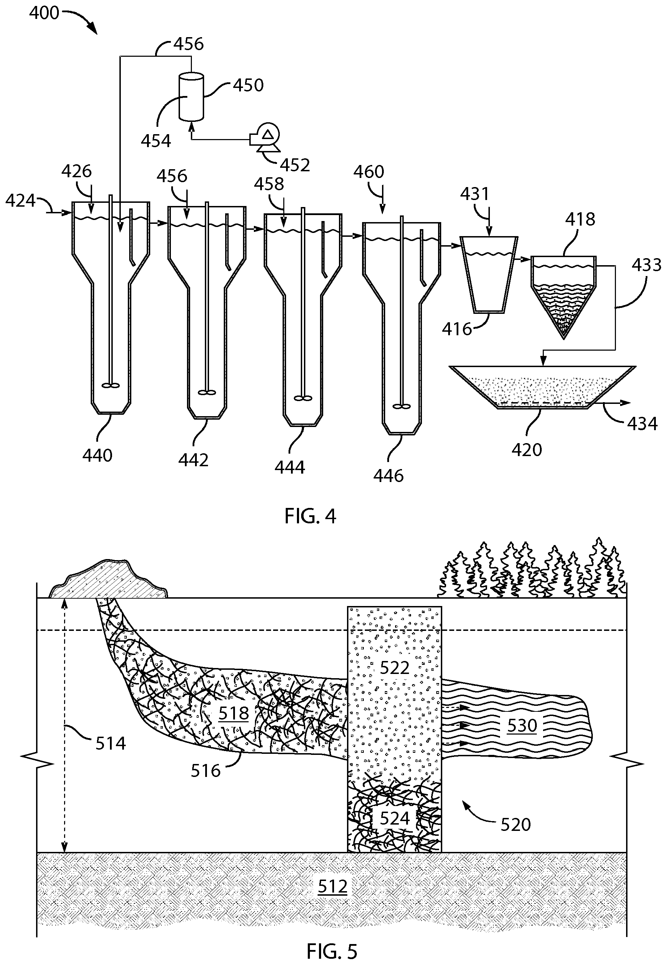

Referring to FIG. 4, a reactor system may include a standalone sulfide generator. The standalone sulfide generator may produce small amount of sulfide ions before introducing into the reactor. The sulfide ions may contribute to precipitating toxic metals. The sulfide generator could be a packed-bed filter column filled with a powder (mixed with sand if necessary to improve its porosity and hydraulic conductivity). The powder may be a sulfide generating material. Fore example the powder may be FeS or $FeS_2$. A low concentration acid may be flowed through the column to dissolve the powder and steadily and gradually release a stream of acid leachate rich of sulfide ions to add into the reactor. Addition of sulfide ions to the reactor is particularly useful for removal of mercury, lead, copper, cadmium, zinc and the like from a liquid stream.

A method of treating an aqueous fluid is described herein that incorporates a chemical process to generate inorganic sulfide ions and introduce the sulfide ions into water treatment process that can result in rapid precipitation and significantly improved removal efficiency of dissolved toxic metal including mercury and many other toxic metals of major environmental concern. The composition, system, and process incorporating sulfide generation may be used in conjunction with the Hybrid Zerovalent Iron/FeOx/Fe(II) water treatment system disclosure herein. Sulfide generation may use a sulfide generator. The sulfide generator could be a standalone toxic metal treatment system or a subsystem that can be incorporated into other water chemical treatment processes such as the Hybrid Zerovalent Iron/FeOx/Fe(II) water treatment system.

Most of dissolved toxic metal ions (e.g., Hg and Pb) can bind with sulfide ions to form metal sulfide that are extremely low in solubility. A filter cartridge filled with FeS as reactive material may be employed as a sulfide generator. When low concentration of acid (e.g., 0.005 M HCl) flows through the FeS filter, acid could gradually dissolve FeS to become $Fe^{2+}$ and $S^{2-}$ (<0.0025M). Because $H_2S$ has high solubility in water (about 3.8 g/L or 0.11 M $H_2S$ at 20 °C), the small concentration of $S^{2-}$ will remain dissolved in water and therefore no $H_2S$ gas bubble will be formed, which could minimize the danger posed by toxic $H_2S$ gas. FeS acid-leaching solution may be introduced into a treatment reactor where the dissolved sulfide ion could bind with various toxic metal ions and precipitate and mineralize together with other solid phase (various iron oxides in the Hybrid Zerovalent Iron/FeOx/Fe(II) water treatment system). For most applications in which toxic metals are present in low or sub-ppm level, addition of low ppm level of sulfide would be sufficient to precipitate all of the concerned toxic metals. The residual $S^{2-}$ may be readily precipitated by the dissolved $Fe^{2+}$ (accompanied with $S^{2-}$) and other non toxic metals present in the water, and therefore pose no threat in the treated effluent.

Referring to Figure 5, according to some disclosures the present zero valent iron (ZVI) is used to build a permeable reactive barrier for remediation of groundwater. Figure 5 shows bedrock 512, permeable zone 514, contaminated plume 516, toxic materials of 518 (e.g. chlorinated organics, heavy metals), permeable reactive barrier 520, heavy metals retained 522, organics degraded 524, and remediated groundwater 530.

Referring again to Figure 3, iron-based system 300 can be operated under various controlled conditions as needed.

An iron-based technique employing a mixture of zerovalent iron (ZVI or $Fe^0$) and iron oxide minerals (FeOx), and Fe(II) species to react with, adsorb, precipitate, and remove various toxic metals, metalloids and other pollutants from the contaminated wastewater is described herein.

An iron-based physical-chemical treatment process that employs a hybrid Zerovalent Iron/FeOx/Fe(I xic metal-contaminated wastewater is described herein.

For example, a system and process involving a hybrid Zerovalent Iron/FeOx/Fe(II) reactor for removing toxic metals in wastewater is described herein. A process employing a fluidized bed system and using a reactive mixture of $Fe^0$, $Fe^{(II)}$ and FeOx to absorb, precipitate, and react with various toxic metals, metalloids and other pollutants for wastewater decontamination is described herein. Toxic metals may be encapsulated within iron oxide crystalline (mainly magnetite powder) that are chemically inert and physically dense for easier solid-liquid separation and final disposal.

While not wishing to be limited by theory, the present inventor believes that the following are contributing mechanisms for the system and process described herein when it is iron based: a) using the reducing power of $Fe^0$ and Fe(II) to reduce various contaminants in oxidized forms to become insoluble or non-toxic species; b) using high adsorption capacity of iron oxide surface for metals to remove various dissolved toxic metal species from wastewater; and c) promoting mineralization of iron oxides and growth of certain iron oxide crystals so that surface-adsorbed or precipitated toxic metals and other pollutants could be incorporated into the iron oxides and remain encapsulated in a stabilized form for final disposal.

A practical and cost-effective method to remove dissolved silica from a liquid stream is described herein.

The composite solid, reactor, activation process (also termed pretreatment process), use of the activation process for making the composite solid, and use of the composite solid for treating a liquid stream to remove toxic metals are described by the present inventor in U.S. provisional patent application No. 61/243,845, filed September 18, 2009, Attorney Docket Number 13260-P023V1, Removal of dissolved silica was discovered by the present inventor in the course of laboratory testing of removal of toxic metals from flue gas desulfurization water using the present composite solid. In turn, it will be understood that in the description with respect to dissolved silica below, based in part on U.S. Provisional Application Serial Number 61/351,194, filed June 3, 2010, entitled "Chemical Process, Composition, Activation, and Reactor for Removing Dissolved Silica from a Liquid Stream", dissolved silica is illustrative of a contaminant.

The technology promotes precipitation of dissolved silica from the liquid stream. The technology has an advantage of economy, through low operating costs of using inexpensive materials. Further, the technology has the advantage environmental benefit, by reducing the amount of solid waste produced by silica removal and the energy consumption of the silica removal process. Still further, the technology has the advantage of effective operation at neutral pH and ambient temperature, increasing efficiency.

Using a composite for silica removal is described herein. The composite solid may include zero-valent iron and an activating material. The activating material may be adapted to overcome the tendency of zero-valent iron to passivate in solution. Thus, the activating material may act as a promoter. That is the composite solid has increased activity for silica removal as compared to zero valent iron. Alternatively or in combination, the activating material may be adapted to electronically mediate an electrochemical reaction between the zero-valent iron and dissolved silica so as to facilitate precipitation of dissolved silica. Thus, the activating material may be semi-conducting. The composite solid may include a plurality of composite particles. The composite particle may have a zero-valent iron core and a layer of activating material. The layer may coat the surface of the zero-valent iron core. The layer may be in the form of a reactive film. The activating material may be present as one or more iron minerals. For example, the activating material may include magnetite. The activating material may be well crystallized. The present composite solid is reactive for silica removal.

A composite solid described herein may be produced by an activation process. The activation process may involve oxidizing a portion of a zero-valent iron precursor so as to form an intermediate material and exposing the intermediate portion to dissolved ferrous ion so to form the activating material. The ferrous ion may adsorb onto the intermediate material. The ferrous ion may covert the intermediate material into a layer of the activating material. The zero-valent iron precursor may be provided as a plurality of particles, such as in a powder. The intermediate material may include an iron corrosion material. The iron corrosion material may contain one or more of ferric oxide and amorphous mixed valent ferric-ferrous (oxy)hydroxides. When the zero-valent iron precursor is a particle, the intermediate material may form as an intermediate layer over a zero-valent core. Exposing such an intermediate layer to ferrous ion transforms the intermediate layer into a layer of activating material. This activating may include maintaining the zero-valent iron precursor in an oxidizing environment. The oxidizing environment may be a solution may contain an oxidant. Suitable oxidants include dissolved oxygen, nitrate, nitrite, selenate, hypochlorite, hydrogen peroxide, iodate, periodate, bromate, and the like. Oxidant is consumed in the activation process when a portion of the zero-valent iron is oxidized to form activating material. When the oxidant is dissolved oxygen, the dissolved oxygen may be provided through aeration. When the oxidant is nitrate, nitrite, or selenate, the oxidant may be provided as a dissolved salt.

Alternatively, or in combination the composite described herein is produced in situ as part of the silica removal process.

The composite solid described herein may be used in a silica removal process. The silica removal process may involve contacting an influent stream with a plurality of the composite particles so as to produce an effluent stream, where the effluent stream is reduced in dissolved silica with respect to the influent stream. The silica removal process may utilize a reactive system that includes a reaction zone including a fluidized bed reactor and a plurality of the composite particles in fluidized bed in the reactor. The contacting may occur in the reaction zone. The reactive system may include a plurality of reaction zones. For example, the reactive system may be a multi-stage reactor system. The reduction in the concentration of dissolved silica of the effluent stream with respect to the influent stream may be greater than 70 %. For example, the reduction may be at last 80 %. For example the reduction may be at least 90%. When the reactive system is a multi-stage reactor system, the first reactor stage may be primarily for removal of dissolved silica from a liquids stream and one or more later stages for other treatment of the liquid stream. For example, later stages may remove toxic materials.

The fluidized bed reactor may include an internal settling zone. The internal settling zone may help to retain a high concentration of iron corrosion products. Thus, the settling zone may facilitate the maintenance of the activating material in the composite. The internal settling zone may further provide extra large surface area to facilitate adsorption, polymerization, and precipitation of dissolved silica.

The reactive system as described herein may further include ferrous iron as ion in solution. The ferrous iron may be adsorbed on the surface of the composite solid. While not wishing to be limited by theory, it appears that a continuous corrosion reaction of zero-valent iron may play a role in promoting rapid polymerization of dissolved silica. Addition of external ferrous ion ($Fe^{2+}$) may play a role in inducing formation of a magnetite coating on zero-valent iron and maintain high reactivity of zero-valent iron at near neutral pH. Alternatively, or in combination, addition of external ferrous ion may play a role as to allow oxidation and precipitation of ferrous ion at near netural pH to directly contribute to removal of dissolved silica.

The removal process as described herein may include sustaining an iron corrosion reaction. Sustaining the iron corrosion reaction may be accomplished by providing ferrous ion to the reaction zone and maintaining the reaction zone in an oxidizing environment. Addition of ferrous ion in the presence of an oxidant in situ facilitates formation of activating material in situ. The oxidizing environment may be a solution may contain an oxidant. Suitable oxidants include dissolved oxygen, nitrate, nitrite, selenate, hyprchlorite, hydrogen peroxide, iodate, periodate, bromate, and the like, and combinations thereof. Oxidant is consumed in the iron corrosion reaction. When the oxidant is dissolved oxygen, the dissolved oxygen may be provided through aeration. When the oxidant is nitrate, nitrite, or selenate, the oxidant may be provided as a dissolved salt. A process for treating a liquid stream in a multi-stage reactor system may include sustaining an iron corrosion reaction in the first reaction zone.

High concentrations of $FeO_x$ maintained in the reactor as described herein may contribute to the removal of silica by providing large surface area with surface charge conditions conducive to polymerization of dissolved silica. $FeO_x$ may be present as magnetite ($Fe_3O_4$). Maghemite ($\gamma$-$Fe_2O3$) may also be present in the reactor. The presence of maghemite may improve removal of dissolved silica. The maghemite may be present as particles of maghemite. Maghemite has been observed when zero valent iron is aerated to promote iron corrosion in the present of dissolved $Fe^{2+}$ and in the absence of nitrate, selenate, or other oxidants. The present inventor believes that the maghemite is produced by oxidation of magnetite. A chemical system as disclosed herein may comprise an additive, where the additive comprises maghemite.

Colloidal or precipitated silica floc when retained in the reactor described herein may also contribute to polymerization and precipitation of dissolved silica.

According to some embodiments, a treatment system for use in the claimed method comprises a chemical reactor system comprising a fluidized bed reactor comprising a reactive zone as claimed. The chemical reactor system may further comprise an internal settling zone in communication with the reactive zone. The internal settling zone may be located in the top region of the chemical reactor system. The internal settling zone may comprise an opening at the bottom of the internal settling zone adapted for the communication with the reactive zone. The internal settling zone may comprise an outlet adapted for removal of effluent from the internal settling zone. The reactive zone may comprise a conduit. The conduit may be central with respect to the reactive zone. The treatment system may be a multi-stage system comprising an additional reactor system. The treatment system may further comprise vessel comprising a sulfide ion generator. The reactive zone comprises a reactive solid and secondary reagent as claimed.

The treatment system may further comprise an additive reagent. The additive reagent may comprise sulfide ion. The treatment system may further comprise an additive solid. The additive solid may comprise an iron sulfide compound. The fluid stream may comprise a waste steam. The fluid stream comprises selenate.

A process for treating a fluid stream is described herein that comprises feeding the fluid stream to a treatment system according to any one of the above-described disclosures. The process may further comprise removing a toxic material from the fluid stream. The removing may comprise: a) at least one of reacting, adsorbing, and precipitating the toxic material from the fluid stream so as to form removable solids in treated effluent; and b) separating the removable solids from the fluid stream. The removable solids may comprise at least a portion of the toxic material encapsulated in the removable solids.

A process for treating wastewater is described herein comprising a toxic material, comprises exposing the wastewater to a reactive material system so as to remove toxic material from the wastewater, wherein the reactive material system comprises zero valent iron particles and ferrous iron, wherein the exposing comprises: a) at least one of reacting, adsorbing, and precipitating the toxic material from the wastewater so as to form removable solids in treated wastewater, wherein the removable solids comprise at least a portion of the toxic material encapsulated in at least a portion of an iron mineral derived from the reactive material system; and b) separating the removable solids from the treated wastewater. The removable solids may further comprise precipitated sulfide.

According to some embodiments, a new and improved fluidized bed apparatus for wastewater treatment for use in the claimed method comprises a fluidized bed, a fluidized reactive zone, an internal solid/liquid separating zone in fluid communication with said reactive zone, an aerating basin, and a settling basin. The apparatus may further comprise control and metering systems for monitoring and manipulating chemical processes within said reactor. The apparatus may further comprise a sand filtration bed. The apparatus may further comprise a central conduit in the fluidized bed reactor to promote convective fluid flow enhancing mixing. The apparatus may further comprise a motorized stirrer in conjunction with said central conduit configured so fluid flow within the conduit is down and flow within the fluidized bed reactor outside the conduit is up. The apparatus may further comprise at least one additional fluidized bed apparatus configured as stages in series with said first apparatus. The apparatus may further comprise control and metering systems for monitoring and manipulating chemical processes run within said reactors. According to some disclosures, the chemical process conditions within different stages are varied to optimize results. According to some disclosures, the first stage is optimized for silica removal. The apparatus may further comprise a sulfide ion generator in fluid communication with the fluidized reactive zone. The fluidized reactive zone described herein comprises a composition comprising zero valent iron, iron oxide mineral, and ferrous iron. The fluidized reactive zone may further comprise sulfide ion. Alternatively or in combination, the fluidized reactive zone may further comprise an iron sulfide compound.

A composition for treating a fluid stream comprising zero valent iron, iron oxide mineral, and ferrous iron is described herein.

A chemical system for treating a fluid stream comprising zero valent iron, iron oxide mineral, ferrous iron, and an additive is described herein.

The additive may comprise an additive reagent. The additive reagent may comprise ionic sulfide. Alternatively or in combination, the additive may comprise an additive solid. The additive solid may comprise an iron sulfide compound. Alternatively or in combination, the additive solid may comprise maghemite. The additive solid may be present as particle comprising the additive solid, where the additive solid particles are distinct from the composite. The composite may be present as particles of the composite. The chemical system may comprise composite particles each comprising a core and a layer layered on the core, where the cores comprise the zero valent iron, and the layers comprise a first portion of the iron oxide mineral. The chemical system may further comprise secondary particles comprising a second portion of the iron oxide mineral.

A composite comprising zero-valent iron and a predetermined activating material selected so as to increase the activity of the composite for removal of a contaminant is described herein.

The contaminant may be a toxic material. The toxic material may be selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. Alternatively or in combination, the contaminant may be silica. The activating material may be adapted to mediate an electrochemical reaction between the zero-valent iron and the contaminant so as to facilitate precipitation of the contaminant. The activating material may be selected from the group consisting of zero-valent iron promoters, semi-conductors, and combinations thereof. The activating material may comprise an iron mineral. The iron oxide mineral may comprise magnetite. The composite may comprise a particle, having a core comprising zero-valent iron and a layer over the core, wherein the layer comprises the activating material. The composite particle may further comprise a second layer over the first layer. The second layer may comprise a plurality of fingers extending from the first layer. The second layer may comprise a non-activating material. The non-activating material may comprise lepidocrocite.

A reactor system for removing a contaminant from a liquid stream is described herein and may comprise a fluidized bed reactor configured for increasing the efficiency of removal of the contaminant from the liquid stream. The contaminant may be a toxic material. The toxic material may be selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. Alternatively, or in combination, the contaminant may be silica. The fluidized bed reactor may comprise an internal settling zone. Alternatively, or in combination, the fluidized bed reactor may comprise a central conduit.

As described herein a composite may be made by a method comprising: a) oxidizing a portion of zero valent iron so as to produce an intermediate material; and b) exposing the intermediate material to ferrous ion so as to produce a composite comprising the remaining zero valent iron and an activating material. Step (b) may comprise transforming the intermediate material into the activating material. Step (a) may comprise providing a dissolved oxidant. The dissolved oxidant may be selected from the group consisting of oxygen, nitrate, nitrite, selanate, hypochlorite, hydrogen peroxide, iodate, periodate, bromate, and the like, and combinations thereof. The intermediate material may comprise an iron corrosion product. The activating material may be adapted to electronically mediate an electrochemical reaction between the zero-valent iron and the contaminant so as to facilitate precipitation of the contaminant. The activating material may be selected from the group consisting of zero-valent iron promoters, semi-conductors, and combinations thereof. The activating material may comprise an iron mineral. The iron oxide mineral may comprise magnetite. The activating material may increase the activity of the composite for removal of a contaminant in comparison with zero valent iron. The contaminant may comprise a toxic material. The toxic material may be selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. The contaminant may comprise dissolved silica. The composite may comprise a particle, having a core comprising the zero-valent iron and a layer over the core, wherein the layer comprises the activating material.

A process for activating zero valent iron for removing a contaminant from a liquid stream, comprising a) oxidizing a portion of the zero valent iron so as to produce an intermediate material; and b) exposing the intermediate material to ferrous ion so as to produce a composite comprising the remaining zero valent iron and an activating material is described herein.

The contaminant may be a toxic material. The toxic material may be selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. Alternatively, or in combination, the contaminant may be silica. Step (b) may comprise transforming the intermediate material into the activating material. Step (a) may comprise providing a dissolved oxidant. The dissolved oxidant may be selected from the group consisting of oxygen, nitrate, nitrite, selenate, hypochlorite, hydrogen peroxide, iodate, periodate, bromate, and the like, and combinations thereof. The intermediate material may comprise an iron corrosion product. The activating material may be adapted to electronically mediate an electrochemical reaction between the zero-valent iron and the contaminant so as to facilitate precipitation of the contaminant. The activating material may be selected from the group consisting of zero-valent iron promoters, semi-conductors, and combinations thereof. The activating material may comprise an iron mineral. The iron oxide mineral may comprise magnetite.

A process for removing a contaminant from an influent stream comprises contacting the influent stream with a composite comprising zero-valent iron and an activating material under removal-promoting conditions so as to produce an effluent stream reduced in concentration of contaminant with respect to the influent stream is described herein. The contaminant may be a toxic material. The toxic material may be selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. Alternatively, or in combination, the contaminant may be silica. The reduction in contaminant concentration may be greater than 70 %. The reduction in contaminant concentration may be greater than 80 %. The reduction in contaminant concentration may be greater than 90 %. The activating material may be adapted to electronically mediate an electrochemical reaction between the zero-valent iron and the contaminant so as to facilitate precipitation of the contaminant. The activating material may be selected from the group consisting of zero-valent iron promoters, semi-conductors, and combinations thereof. The activating material may comprise an iron mineral. The iron oxide mineral may comprise magnetite. The removal-promoting conditions comprise substantially neutral pH. The pH may be between 6 and 8. The pH may be between 7 and 8. The removal-promoting conditions may comprise ambient temperature.

A composite for removing a contaminant from a fluid stream, comprising zero valent iron, an iron oxide mineral, and ferrous iron, wherein the ferrous iron is disposed so as to facilitate maintenance of the iron oxide mineral, and wherein the composite is active for removing the contaminant from the fluid stream is described herein.

The contaminant may comprise a toxic material. The toxic material is selected from the group consisting of selenium, arsenic, mercury, aluminum, antimony, beryllium, thallium, chromium, cobalt, lead, cadmium, silver, zinc, nickel, molybdenum, nitrates, bromates, iodates, periodates, and borates. Alternatively, or in combination, the toxic material may comprises a phosphate. The contaminant may comprise dissolved silica. The iron oxide mineral may comprise a zero valent iron promoter with respect to removal of the contaminant from the fluid stream. The iron oxide mineral may comprise a conducting material. The iron oxide mineral may comprise Fe(II), Fe(III), and oxygen. The iron oxide mineral may comprise Fe(II), Fe(III), oxygen, and hydrogen. The iron oxide mineral may comprise magnetite. The zero valent iron and iron oxide mineral may together comprise a reactive solid, where the reactive solid is suspended in a solution, and where the ferrous iron is selected from the group consisting of ferrous iron dissolved in the solution and ferrous iron bound to the surface of the iron oxide mineral. The fluid stream may be at near neutral pH. The composite may be made by a method comprising activating the zero valent iron, wherein the activating comprises adding ferrous ion and an oxidant to a solution in which the zero valent iron is suspended, where the adding allows formation of the iron oxide mineral. The adding may comprise pre-treating the zero valent iron outside the presence of the fluid stream containing the contaminant. The adding may comprise activating the zero valent iron in situ in the presences of the fluid containing the contaminant. A chemical system comprising a composite according to any one of the above-described disclosures and a solution, where the composite is disposed in the solution, and where the chemical system further comprises an additive disposed in the solution is described herein. The additive may be selected from the group consisting of maghemite particles, dissolved ionic sulfide, iron sulfide particles, and combinations thereof. A treatment system for treating a fluid stream comprising a chemical system according to any of the descriptions above and a reactor, wherein the reactor comprises a reactive zone containing the chemical system is described herein. The reactor may further comprise a settling zone in communication with the reactive zone. Alternatively, or in combination, the reactor may further comprise a central conduit adapted so as to circulate the chemical system within the reactive zone. The treatment system may comprise a second reactor such that the treatment system comprises a multi-stage system. The first reactor may be optimized for removal of dissolved silica and the second reactor may optimized for removal of the contaminant, wherein the contaminant comprises a toxic material. The treatment system may further comprise a sulfide generator in communication with the reactor. A process comprising contacting an above-described composite with a fluid stream in a reaction zone under removal-promoting conditions so as to remove a portion of the contaminant from the aqueous stream so as to produce an effluent is described herein. The removal-promoting conditions may comprise near neutral pH. The pH may be between 6 and 8. The removal-promoting conditions may comprise ambient temperature. The contaminant may comprise removing dissolved silica so as to produce the effluent and the process may comprise removing a toxic material from the effluent. The may comprise providing a concentration of dissolved ferrous iron in the reaction zone selected so as to optimize activity of the composite for removing the contaminant.

The following examples are included to demonstrate particular embodiments of the present invention. It should be appreciated by those of skill in the art that the methods disclosed in the examples that follow merely represent exemplary embodiments of the present invention.

**EXAMPLES**

**Example 1. Iron corrosion model for activity of Hybrid ZVI/FeO$_x$/Fe(II) material.**

While not wishing to be limited to theory, the present inventor proposes the following findings. Passivation of Fe$^0$ is caused by ferric oxides or amorphous ferrous oxyhydroxides. Ferric oxides or amorphous ferrous oxyhydroxides are formed under most natural or engineered environments. A magnetite coating on Fe$^0$ can maintain high Fe$^0$ reactivity. Adding dissolved Fe$^{2+}$ can promote transformation of ferric oxides to magnetite under the right chemical environments. In this way, Fe$^0$ reactivity can be sustained.

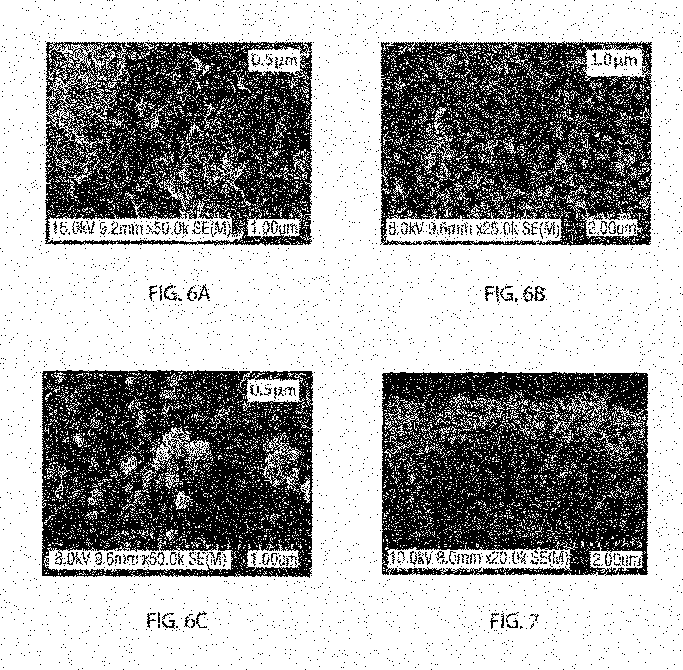

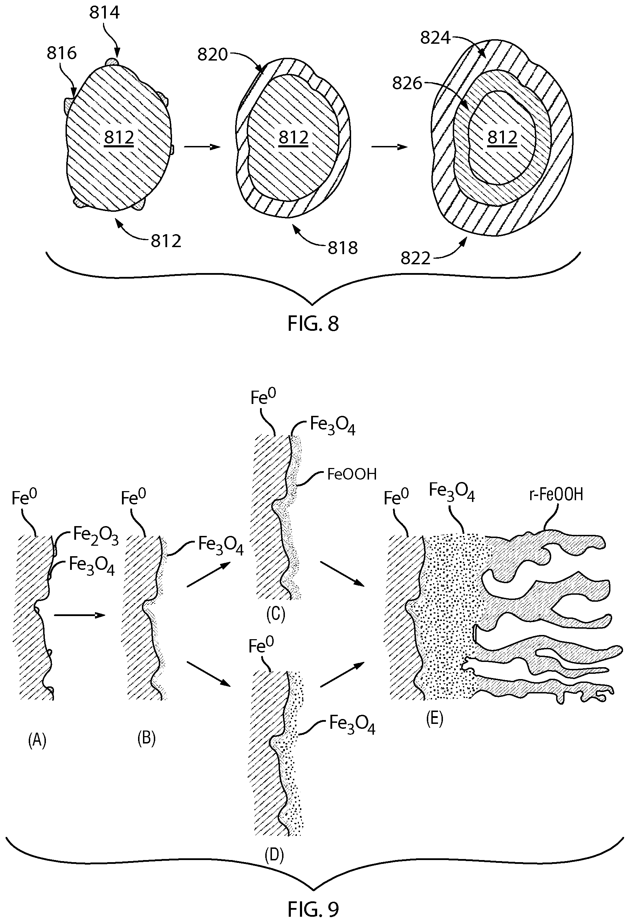

While not wishing to be limited by theory, the present inventor proposes a semi-conducting corrosion model. Referring to Figures 6 and 7, SEM micrographs of a corrosion coating on zero valent iron show a) an outer layer dominated by lepidoprocite, b) middle layer including both magnetite and lcpidocrocitc, and c) an inner layer dominated by magnetite. In the presence of certain strong oxidants such as dissolved oxygen, hypochlorite, hydrogen peroxide, nitrite, iodate, periodate, nitrate and the like in an aqueous solution with near neutral or weak alkaline pH, that is for example pH 6-10, iron corrosion in such aqueous chemical environment tends to develop a ferric oxide coating (e.g., lepidocrocite) as part of its corrosion products. Referring to Figure 8, source iron grain 810 include Fe(0) 812, $\alpha$-Fe$_2$O$_3$ 814, and Fe$_3$O$_4$ 816. Without Fe$^{2+}$, iron grains 812 would be coated by lepidocrocite 820 (including $\gamma$-FeOOH) from Fe(0)-nitrate (or selanate) reaction, forming undesirable particles 818. With Fe$^{2+}$, lepidocricite 826 (including $\gamma$-FeOOH) would be rapidly converted into magnetite 824 (including Fe$_3$O$_4$), followed by rapid reduction of selenate, forming desirable particles 822. Referring to Figure 9, while not wishing to be limited by theory, aspects of a model include the following. Some reaction sites are located at the bottom of pores. Electronic properties of iron oxides are: magnetite is an excellent semiconductor, in which electrons can move almost freely; whereas lepidocrocite is an electron barrier. Reactivity of Fe$^0$ involves a balance between the oxidizing power of a compound and the electron transfer resistance of the yielded iron corrosion coating.

The above description in this example is contained in Appendix D to U.S. provisional patent application No. 61/243,845, filed September 18, 2009, Attorney Docket Number 13260-P023V1.

It will be understood that a corrosion coating can result on zero valent iron in an oxidizing environment.

It will be understood that lepidocrocite is illustrative of other passivating iron oxide materials, as described herein. It will be understood that passivating ferric oxides include lepidocrocite, maghemite, hematite, and other non-conducting ferric oxides.

It will be understood that magnetite is illustrative of iron oxide minerals. The iron oxide mineral may be non-stoichiometric. The iron oxide mineral may be a conductive. As used herein conductive includes both metal-like and semi-conductive. The iron oxide mineral may be a defect iron oxide mineral. For example, magnetite is known to have a defect structure where atoms can be missing and charge compensated for. Magnetite has a spinel structure with semi-conducting properties. While not wishing to be limited by theory, the present inventors believe that the spinel structure and/or semi-conducting properties facilitate the ability of magnetite to activate zero valent iron for removal of contaminants from a fluid stream.

According to some embodiments, an iron oxide mineral is formed by transformation of a passivating ferric oxide. Alternatively, or in combination, iron oxide mineral is formed by transformation of zero valent iron.

It will be understood that as part of a chemical system for removal of a contaminant from an aqueous stream ferrous iron, as Fe(II), may be present as Fe$^{2+}$ (ferrous ion) in solution, surface bound Fe$^{2+}$, or Fe(II) incorporated into reactive solids.

The present inventor contemplates that one possible role of Fe$^{2+}$ is that surface bound Fe$^{2+}$ facilitates one or more of formation and maintenance of the iron oxide mineral. The surface bound Fe$^{2+}$ may facilitate conversion of ferric oxide to magnetite. Surface bound Fe(II) species could be labile. For example, a surface bound Fe(II) species may undergo one or more of the following: exchange with one or more of Fe$^{2+}$ in solution and Fe(II) in the iron oxide mineral, change valence state, and be oxidized. As a surface bound Fe(II) species undergoes a labile process it may be replenished so as to maintain the concentration of surface bound Fe(II).

It will be understood that formation of the hybrid ZVI/FeOx/Fe(II) via a corrosion coating of passivating ferric oxide is illustrative of formation of the hybrid ZVI/FeOx/Fe(II). Alternatively, using a nitrate pretreatment process as described, for example, hybrid ZVI/FeOx/Fe(II) forms directly upon adding ferrous iron and nitrate to a zero valent iron suspended in a solution.

It will be understood that the finger structure shown in Figure 9 is illustrative of a porous structure. The porous structure may be of a corrosion coating. Alternatively, or in combination, the porous structure may be of a passivating ferric oxide.

It will be understood that the core/shell structure shown in Figure 8 is a simplified schematic illustration of a hybrid ZVI/FeOx/Fe(II) material. The iron oxide mineral may be interpenetrated with one or more of the zero valent iron and a passivating ferric oxide. Thus, the hybrid ZVI/FeOx/Fe(II) material may include an interpenetrating network. This is illustrated in Figure 6, in which an outer layer was dominated by lepocrocite, an inner layer was dominated magnetite, and a middle layer included both lepidocrocite and magnetite.

It will be understood that a porous passivating ferric oxide may partially cover the iron oxide mineral in a composite, with the pores of the porous passivating ferric oxide allowing Fe(II) in solution to diffuse to the surface of the iron oxide mineral so as to become surface bound Fe(II).

It will be understood that an advantage of the hybrid ZVI/FeOx/Fe(II), is a sustainably high level of activity. Therefore, in comparison to zero valent iron, the hybrid ZVI/FeOx/Fe(II) improves both the activity and the lifetime.

It will be understood that the hybrid ZVI/FeOx/Fe(II), as described in this example is illustrative of a reactive solid, as disclosed herein.

**Example 2. Experimental Results of Using a Hybrid ZVI/FeOx/Fe(II) Reactive System to Treat FGD Wastewater**

The present system and process are a result of laboratory research conducted by the present inventor to develop a cost-effective method for removing toxic metals in the flue gas desulfurization wastewater generated from wet scrubbers of coal-fired steam electric power plants. Although developed specifically for treating the FGD wastewater with selenium as the main target contaminant, this chemical reactive system is suitable for general application of removing a wide spectrum of toxic metals in industrial wastewater, tail water of mining operations, and contaminated groundwater, and like contaminated aqueous streams containing like contaminants. References to Appendices are to the Appendices of U.S. provisional patent application No. 61/243,845, filed September 18, 2009, Attorney Docket Number 13260-P023V1.

According to various experimental embodiments, as shown herein, a single stage may achieve 90% selenate removal from synthetic wastewater within 4 hr reaction time. A three-stage system, in comparison, may achieve a 96% removal rate from synthetic wastewater. The synthetic wastewater did not contain dissolved silica. As disclosed herein, when the aqueous stream to be treated contains dissolved silica, the present inventor contemplates removal of the dissolved silica in one or more stages before removal of other contaminants such as toxic materials.

The present inventor believes that some exemplary novel aspects are as follows. A first aspect is discovery of the role of externally-added $Fe^{2+}$ in sustaining the reactivity of $Fe^0$ with respect to selenate reduction. Externally-added $Fe^{2+}$ may convert less reactive ferric oxide coating on $Fe^0$ particles into a highly reactive and electron-conducting mixed-valent $Fe_3O_4$ oxide coatings and therefore rejuvenate the passivated $Fe^0$ surface. A second aspect is discovery that surface-bound Fe(II) on magnetite ($Fe_3O_4$) particles can rapidly reduce selenate to insoluble elemental Se and be removed from the liquid phase. The present inventors have found, based on extensive tests, that surface-bound Fe(II) on magnetite (or in combination the reactive Fe(II) in non-stoichiometric magnetite) could rapidly reduce selenate to selenite and then elemental selenium. Selenite appears to be an intermediate product and will finally be further converted to elemental Se. A third aspect is discovery that the chemical conditions that promote the formation of magnetite ($Fe_3O_4$) as a reaction product from the oxidations of Fe(0) and surface-bound Fe(II) (coupled with reductions of dissolved oxygen, nitrate, and selenate in the water). A fourth aspect is development of a circulating bed system (e.g. a fluidized bed and/or stirred system) with an internal settling zone and a central conduit that can (a) retain high concentration of $Fe_3O_4$ solid particles and therefore offer abundant reactive surface area that can host surface bound Fe(II)-selenate redox reaction; (b) offer an effective mixing condition so that $Fe^0$, $Fe_3O_4$ and s.b.Fe(II) can achieve their respective roles in removing toxic metals; (c) avoid excess diffusion of oxygen from air into the reactive system so that less $Fe^0$ and Fe(II) are wasted. A fifth aspect is development of a multiple-stage fluidized bed system that will (a) achieve better toxic metal removal efficiency than a single stirred-tank reactor; (b) mitigate the inhibitive effect of certain impurities in water such as dissolved silica on iron corrosion reaction through the use of first stage so as to maintain high toxic metal removal efficiency in the following stages; (c) control nitrate reduction efficiency to a level of desire; (d) reduce consumption of ferrous salt and $Fe^0$; (e) reduce or completely eliminate residual dissolved $Fe^{2+}$.

Bench Scale Tests

Single Stage Reactor

Three bench-scale fluidized-bed reactors were fabricated and operated.

Reactor#1 had an internal settling zone (the compartment on the left side) in which it allows reactive solid to separate from the water and be retained within the fluidized zone. Reactor#2 is identical to Reactor#1. Reactor#1 and #2 both had an operating capacity of 7.2 L and had an internal settling zone (0.5 L) within the reactors.

Reactor#3 is an integral system that has an internal settling zone (far left), an aeration basin (near left), and a second settling basin (right) within the reactor. Reactor#3 had an operating capacity of 10 L. It had a built-in aeration basin (0.6 L) and a built-in final settling basin (Figures 5A and 5B). Peristaltic pumps (Masterflex pumps, Cole-Parmer, Illinois) were used to pump in wastewater and the needed chemical reagents. A small aquarium air pump (purchased from Wal-Mart) as used to provide aeration. A motorized stirrer (max. 27 watt, adjustable rpm 100-2000, three-blade propeller stirrer) was used to provided mixing condition.

Zerovalent iron powder used in the tests was obtained from Hepure Technology Inc., including H200+ and HC15 (see Batch Test results for more details). Other reagents used in the operation include HCl, $FeCl_2$, and NaOH.

Start Up

Contrary to what many experts in ZVI technology believed, fresh ZVI is not necessarily more effective for chemical reduction of selenate. Batch test results (Appendix B and Appendix C) confirmed that ZVI grains coated with magnetite could achieve a much higher reaction rate than ZVI grains of a relative fresh surface with little or very thin iron rusts. To improve performance of a ZVI system, a unique start-up process is employed to coat the ZVI powder surface with a more reactive and passivation-resistant, chemically-stable magnetite coating. When a reactor was started with using fresh ZVI powder, it took some time under carefully controlled chemical environment to coat ZVI with a magnetite layer.

Several factors are desirably considered in order to have a rapid and successful start-up for a treatment system. First, the physical chemical properties of iron, most important the size distribution of iron particles, are considered. Both reductions of selenate by ZVI and by surface bound Fe(II) (s.b.Fe(II)) on magnetite are surface-mediated heterogeneous reactions; therefore, increasing solid-liquid interfacial area would increase overall reaction rate. Fine ZVI powders could provide larger surface area and therefore achieve higher selenate reduction under comparable conditions. This was confirmed in batch tests. The continuous flow reactor tests were successfully started up five times. It appears that finer iron particles (dominant size: <45 $\mu$m in diameter) may be started up faster than larger particles (dominant size: 45-150 $\mu$m in diameter). The chemical purity of ZVI powder was found to not a major factor. In batch and continuous-flow tests, various purities and composition of ZVI powder were used. No major differences were observed among the different iron sources with respect to reaction mechanism and rate for selenate reduction. Over time, the zerovalent iron grains may all be coated with a magnetite coating and in the present of dissolved $Fe^{2+}$, they all achieve high reactivity for selenate reduction.

Generation of a magnetite coating on a ZVI particle is helpful to the success of the system. Appropriate aqueous chemical conditions must be maintained for the purpose. Iron corrosion could produce various iron oxides under different chemical conditions. Our batch and continuous flow reactor tests show that in order to generate magnetite from iron corrosion reaction, three conditions must be met: a pH of 6.5 to 7.5; adequate dissolved $Fe^{2+}$ that can form s.b.Fe(II); and appropriate species and concentration of oxidants. Oxidants can be certain oxyanions such as selenate, nitrate, nitrite, iodate ($IO_3^-$) and periodate ($IO_4^-$) in the wastewater. Oxidation of ZVI by these oxidants tends to form ferric oxides (most likely lepidocrocite, $\gamma$-FeOOH). The small quantity of ferric oxides can be transformed to magnetite in the presence of surface-adsorbed Fe(II). Dissolved oxygen can also serve as an oxidant to generate magnetite (Huang et al. 2006). Low-intensity aeration in the early stage could accelerate the magnetite-coating process. High-intensity aeration should be avoided because it could form large quantity of ferric oxides even in the presence of dissolved $Fe^{2+}$ and moreover, it will waste ZVI. Our experiences from five successful start-ups using simulated FGD wastewater indicates that in general the system will take about one to two weeks for the fresh ZVI to mature; over time, the system will gradually improve before reaching a state of high performance.

As an alternative (and recommended) start-up procedure, we used nitrate solution (add 30 mg/L nitrate-N in tap water, operating HRT = 12 hr) instead of simulated FGD wastewater to feed the system. Nitrate would be completely reduced and in the presence of adequate dissolved $Fe^{2+}$, a high quality (better crystallized and less amorphous, containing less ferric oxides or ferrous hydroxides) magnetite coating can be formed on ZVI particles. Start-up with nitrate solution would take only two days.

A general start up procedure and exemplary controlled parameters included one or more of the following:

1) Selection of ZVI sources. Finer iron powder (< 50 $\mu$m) is preferred. Low iron purity and rusty surface in general are not a problem.

2) Add 80-100 g/L ZVI powder in the fluidized zone. Turn on mixing equipment.

3) Start-up with FGD wastewater

- Feed FGD wastewater at a rate equivalent to HRT=12 hrs. The exact compositions of raw FGD wastewater may vary widely, but in general contains high concentration of Cl-, sulfate, and relative high concentration of nitrate.
- Feed $FeCl_2$ solution *(0.1 M $FeCl_2$ in 0.005 M HCl solution)* at a rate equivalent to 1.5 m mole $Fe^{2+}$ per 1 L wastewater
- Feed HCl at a rate to control the pH in the fluidized zone at 6.8-7.2.
- If the FGD wastewater contains limited concentration of nitrate (e.g., below 10 mg/L nitrate-N), then a low intensity aeration in the fluidized bed should be provided to accelerate the formation of a magnetite coating.

Start-up with nitrate solution:

- Feed nitrate solution *(30 mg/L nitrate-N)* at a rate equivalent to HRT=12 hrs.
- Feed $FeCl_2$ solution *(0.1 M $FeCl_2$ in 0.005 M HCl solution)* at a rate equivalent to 1.5 m mole $Fe^{2+}$ per 1 L wastewater
- Adjust HCl solution *(0.1 M HCl)* feeding rate to control the pH in the fluidized zone at 7.0-7.5.

Normal Operation

Once started up successfully, the system requires only low-level maintenance effort. Routine operations and maintenances include one or more of:

(a) Monitor the quality of wastewater entering the system. The most important parameters include: pH, alkalinity, acidity, total suspended solid (TSS). Of course, toxic constituents in the raw wastewater should be monitored.

(b) Monitor the pH in the fluidized reactive zone. Performance of the system depends mostly on pH. For a single-stage system, pH in the reactive zone should be maintained within 6.5 to 7.5. Both HCl and $FeCl_2$ can be used to control the system.

(c) Monitor the pH in the aeration basin. Dissolved $Fe^{2+}$ can be oxidized more rapidly at pH > 7.0. Formation and settling properties of ferric oxide flocculent depends also on pH. Therefore, it is recommended that aeration basin be operated at pH 7.5-8.0.

(d) Monitor the performance of settling tank and sand filtration bed. The maintenance requirements are no different from those unit processes in typical water or wastewater treatment plants. Most importantly, the settled sludge should be discharged or returned at an appropriate rate to avoid excessive build-up of the reactor.

(e) Excess solid discharge and disposal.

If the raw wastewater contains relative high suspended solids, a pre-settling basin may be needed to reduce TSS in wastewater before entering the system. This can avoid accumulation of inert TSS in the fluidized reactive zone that might dilute the effective ZVI/ $FeO_x$ solid concentration.

For a single-stage reactor, the concentration of total solid in the fluidized zone could be maintained between 80 and 120 g/L. Assuming that 30 mg $Fe^{2+}$/L be converted to $Fe_3O_4$ and the reactor is operated at HRT = 4 hours (based on test results), we estimate that it will add 0.25 g/L $FeO_x$ solid per day and therefore will take 160 days for the reactor to increase its solid from 80 g/L to 120 g/L. This estimate conforms to the fact that during a three-month continuous flow test (hydraulic retention time varies between 3 to 12 hours), we discharge no solid from the fluidized bed reactor.

ZVI/ $FeO_x$ reactive solids are considered mature when the surface of ZVI grains is covered with well crystallized magnetite (dark black color after dry) and a significant presence of discrete magnetite crystalline (may be aggregated into a larger particle due to its strong magnetic property). Unlike typical ZVI powder, matured ZVI/$FeO_x$ reactive solids will not cement easily when settled at the bottle. Therefore, the reactor could be stopped for weeks with no risk of iron powder cementation. That is, the reactor can be stopped and restarted very flexibly without a need to vacate the ZVI/ $FeO_x$ mixture from the reactor.

Results

Results of testing are described in Appendix A and Appendix D. The results demonstrate that a single-stage reactive system alone can effectively remove high concentration of selenate within a relatively short reaction time. A multiple-stage system can further improve the overall performance. Since for most FGD wastewater, Se(VI) concentration will be lower than 5 mg/L used in this test (most typically, 1-2 mg/L), the present inventor estimates that an HRT of less than 4 hours would be sufficient for most applications. Moreover, the reactor is operated at near neutral pH.

Multi-Stage Reactor

The start-up procedure and normal operation requirements described for a single-stage system can be similarly applied for a multistage system. Again, it is desirable that nitrate solution be used for rapid start-up. Nitrate solution was also found to be very effective in rejuvenating a fouled system in which the system was accidentally acidified (pH dropped to below 4.0) for a few hours, which might permanently damage iron oxide reactivity and resulted in extremely poor performance even after returning to normal operation conditions.

In this test, Reactor#1, #2, and #3 was combined in sequence to form a three-stage FBRs treatment system. This system was a 24-liter three-stage $ZVI/FeO_x/Fe(II)$ fluidized-bed reactor system. Initial testing on the three-stage system is described in Appendix A and Appendix D.

Continuous flow tests were conducted for six months on the bench-scale (24 liter) three state fluidized bed system based on the $ZVI/FeO_x/Fe(II)$ technique with high-strength raw FGD wastewater.

The system was demonstrated during a 6 month testing period to be a complete success, as shown in Table 1.

Table 1.

| Major Pollutants | Concentration in FGD wastewater | Concentration after treatment | Removal Efficiency |
|---|---|---|---|
| Selenium | 7.8 mg/L $SeO_4^{2-}$-Se | dissolved Se < 0.15 mg/L | > 98% |
| Mercury | 335 $\mu$g/L dissolved Hg | dissolved Hg < 0.2 $\mu$g/L | > 99.9% |
| Arsenic* | 400 $\mu$g/L dissolved As(III) and As(V) | dissolved As < 0.2 $\mu$g/L | > 99.9% |
| Nitrate | 26 mg/L nitrate-N | nitrate-N < 5.0 mg/L | > 80% |
| Boron ** | 200~600 mg/L dissolved B | | projected to be > 70% |
| Notes: * The original raw FGD wastewater contains only less than 0.6 $\mu$g/L total dissolved As. To evaluate Arsenic treatment effectiveness, 400 $\mu$g/L arsenite-As and arsenate-As was added. ** Removal of dissolved boron in the system is still being tested and needs to be further verified. | | | |

Laboratory Tests

Extensive laboratory tests have been conducted to understand the treatment conditions and mechanisms.

Settling of reactive solid (black) from fluid (clear) has been observed by the present inventor.

This inventor has conducted extensive batch tests (Appendix B, Appendix C, and Appendix D) in addition to the continuous flow tests (Appendix A and Appendix D) to investigate the fundamental chemistry and application issues in the complicated reactive system that comprised of $Fe^0$, dissolved $Fe^{2+}$, various FeOx in different forms and compositions, dissolved oxygen, simulated FGD wastewater or real FGD wastewater with a very complex matrix of constituents. Laboratory experiments and their results are described in details and discussed in depth in the Appendix A, Appendix B, Appendix C, and Appendix D.

Those Appendices include Figure Captions as follows, renumbering sequentially. First, for continuous test the figures captions are as follows.

Findings from these tests are summarized as below:

1) In a rigorous anaerobic condition, selenate (at ppm level concentration) cannot be effective reduced by pure $Fe^0$ (with fresh surface that contains negligible iron oxides). Only negligible selenate could be reduced. That is, reactivity of $Fe^0$ will be naturally passivated by the presence of selenate. This explains why previous investigators failed to achieve a sustainable removal when using $Fe^0$ to reduce selenate.

$$SeO_4^{2-} + 2\,Fe^0 + 2\,H_2O \rightarrow Se^0\downarrow + 2\,FeOOH + 2\,OH^- \qquad (eq.\ 1)$$

Lepidocrocite ($\gamma$-FeOOH) forms a passive coating on the surface of $Fe^0$ particle and therefore inhibits further reaction between $Fe^0$ and selenate.

2) In the presence of dissolved oxygen, selenate could be reduced by $Fe^0$ at a modest rate; however, to sustain the desired selenate-$Fe^0$ reaction, much of $Fe^0$ will be wastefully consumed by dissolved oxygen as a result. The implication is: An excessive aerated $Fe^0$ system might be able to remove selenate, but the process is economically infeasible due to wasteful consumption of $Fe^0$ by oxygen and generation of large quantity of iron oxide sludge.

3) Reduction of selenate could be greatly accelerated in the presence of dissolved $Fe^{2+}$ at circum-neutral pH environment. The reaction rate increases as dissolved $Fe^{2+}$ increases. A presence of 0.3 mM dissolved $Fe^{2+}$ will be adequate. At near neutral pH and anaerobic environment, the reaction will form magnetite as their product.

$$SeO_4^{2-} + 2\ Fe^0 + Fe^{2+} \rightarrow Se(0)\downarrow + Fe_3O_4 \qquad (eq.\ 2)$$

In this reaction, the direct role of $Fe^{2+}$ might be to facilitating the conversion of passive FeOOH to reactive $Fe_3O_4$ and therefore, greatly accelerating the reaction.

4) Selenate could be rapidly reduced by s.b.Fe(II) on activated magnetite surface at near neutral or weak acidic pH in the absence of $Fe^0$.

$$Fe^{2+}\ (aqueous) \xrightarrow{\ Fe_3O_4\ } s.b.Fe^{(II)} + 2\ H^+ \qquad (eq.\ 3)$$

$$SeO_4^{2-} + 9\ s.b.Fe^{(II)} \rightarrow Se(0)\downarrow + 3\ Fe_3O_4 + 2\ OH^- \qquad (eq.\ 4)$$

Unlike $Fe^{2+}$ in the equation 2, Fe(II) here serves as a reductant and directly contributes one electron to the reduction of selenate.

5) Nitrate, which is often present at tens of ppm level in the FGD wastewater, will not inhibit selenate reduction by $Fe^0$. Indeed, nitrate was found to slightly accelerate selenate reduction by $Fe^0$. In contrast, reduction of nitrate by $Fe^0$ will be inhibited by the presence of selenate. In a rigorous anaerobic environment, reduction of nitrate by $Fe^0$ can occur only after selenate is completely reduced in the system.

6) Both reductions of nitrate and selenate by $Fe^0$ will consume certain amount of $Fe^{2+}$. Nitrate reduction consumes 0.75 mM Fe(II)/1.0 mM nitrate; selenate reduction consume approximately 1.0 mM Fe(II)/1.0 mM selenate.

7) The complex matrix of constituents in the FGD wastewater may affect selenate reduction rate in the $Fe^0$/FeOx/Fe(II) system. Sulfate will slow down the reaction rate several folds. Chloride at a concentration below 800 mg/L does not affect the reaction rate. Even with the interference of high concentrations of chloride and sulfate, the overall reaction rate still remains reasonably fast.

8) Source of $Fe^0$. The mechanisms of $Fe^0$-selenate reaction will not be altered by the use of difference Fe0 sources. Tests with different purities of $Fe^0$ show that $Fe^0$ purity has no apparent relationship with the achievable reaction rate. There is no obvious advantage from the use of high pure (>99%), little rusted, electrolytic iron powder (Fisher Scientific) over low-grade (95%), industrial iron filings. The size of iron power however does matter. Fine iron powder will provide more reactive surface than coarse iron powder. Fine iron powder may also mature faster and ease start-up of the system.

Pilot Scale Tests (Prophetic)

The success of the laboratory-scale prototype has paved the road for constructing a pilot-scale system and conducting extended field demonstrations to further evaluate, develop and refine the technology.

The present inventor contemplates a pilot-scale treatment system based on a proved laboratory-scale prototype and conduct long-term field tests to further develop the technique and finalize its design for commercialization.

The pilot scale test may involve one or more steps, such as: design and construct a pilot treatment system based on the laboratory prototype; conduct on-site long-term demonstrations in conjunction with further laboratory mechanistic study; collaborate closely with industry and other stakeholders to further refine the system to meet the industrial needs and environmental goals. Contemplated pilot scale tests are further described in Appendix D.

The present inventor contemplates an integral treatment system that can treat FGD wastewater at a flow rate of 2 to 5 gallon per minute, which represents about 1% of wastewater expected from a 1,000 megawatt power plant. The pilot system may be mounted on a trailer that is adapted to be hauled to different test sites.

Example 5 below describes field experiments that are a realization of on site bench-scale continuous-flow treatment demonstration tests. An exemplary pilot scale prototype is contemplated capable of treating 1-3 gpm.

Industrial Operation (Prophetic)

Based on the bench scale test described above, the present inventor estimates that for treating a 500 gpm FGD waste stream from a 1,000 megawatt, a iron-based system will consume per year: 200 to 400 ton of iron chemical (est. bulk price: $1,000 to $2,000/ton); 200 to 400 tons of concentrated HCl; 50-200 kilowatt electric power consumption. Further, the present inventor estimates that for treating a 500 gpm FGD waste stream from a 1,000 megawatt coal-fired facility, a iron-based (e.g. hybrid ZVI/FeOx/Fe(II)) treatment system will generate per year : 300 to 800 tons of iron oxide (weight in dry mass; laden with toxic metals), solid waste to be disposed.

**Example 3. Sulfide Generation for Enhancing Toxic Metal Removal in Hybrid Zero-Valent Iron/FeOx/Fe(II) Water Treatment System**

This example demonstrate use of sulfide generation to provide sulfide ions to further improve the heavy metal removal capability of the Hybrid Zerovalent Iron/FeOx/Fe(II) water treatment system described in Example 2. The Hybrid Zerovalent Iron/FeOx/Fe(II) water treatment system was demonstrated in Example 2 to remove selenium from industrial wastewater (represented by flue gas desulfurization wastewater) by chemically transforming highly soluble selenate-selenium to insoluble elemental or selenide-selenium. The treatment system was also found to be effective in removing significant percentages of most toxic metals and metalloids of major environmental concern. Despite the great success in selenium removal, the Hybrid ZVI process may have difficulty in meeting the future EPA guideline for total mercury < 12 ppt without further process improvement.

A bench-scale prototype Hybrid Zerovalent Iron/FeOx/Fe(II) treatment system was developed and demonstrated through a continuous-flow field test for treating real FGD wastewater. The removal efficiency for selenate-selenium and total mercury (dissolved Hg2+ varied from about 2 ppb to 60 ppb in raw FGD wastewater) was found to be about 99.8% and 99.99%, respectively, with total Se < 10 ppb and total Hg < 5 ppt in the treated effluent. The prototype also achieved over 97% removal for many other toxic metals including arsenic, lead, chromium, cadmium, vanadium and nickel. Despite the high success of field test, the removal mechanism of the treatment system for toxic metals such as Hg (other than Se) was not adequately understood. Therefore, there is no guarantee that the Hybrid Zerovalent Iron/Fe-Ox/Fe(II) treatment system could achieve similar efficiency for Hg and other metals when treating wastewater of different constituent matrix.

The bench scale test was followed up with the field test to conduct additional laboratory tests (both batch and continuous-flow) to verify the treatment effectiveness of both conventional ZVI and the hydrid ZVI/FeOx/Fe(II) for Hg removal. We found that both conventional and hybrid ZVI could ensure 90% removal of dissolved $Hg^{2+}$ removal in a simpler water matrix (simulated wastewater spiked with $Hg^{2+}$). For example, when using the prototype reactor to treat a Hg-spiked tap water (supplied from groundwater, have various concentration of $Ca^{2+}$, $Mg^{2+}$, $Na^+$, $Cl^-$, $SO_4^{2-}$, carbonate and dissolved silica etc), 12 hr treatment could reduce $Hg^{2+}$ from 150 ppb to about 10 to 25 ppb. Extending reaction time from 2 hrs to 24 hrs will only marginally improve Hg removal. The 90% removal of Hg was not acceptable to the industry. Similar results were observed when treating DI water spiked with $Hg^{2+}$. Separate batch tests with various combinations of water quality and constituents confirmed that high removal Hg by ZVI process is not guaranteed.

The extraordinary high Hg removal observed in the field demonstration may be attributed to certain constituents in the real FGD wastewater. This was confirmed from controlled batch test that compared Hg removal from real FGD wastewater with synthetic (composition known) wastewater. In comparable batch tests, a ZVI reactive system could reduce dissolved $Hg^{2+}$ from 153 ppb to below 0.5 ppb when treating real FGD wastewater; in contrast, it only reduced Hg2+ from 150 ppb to about 20 ppb when synthetic wastewater was used. A number of factors (pH, nitrate, selenate, and Cl-, sulfate, dissolved silica etc) were screened. Two most likely constituents in the real FGD water were identified that may be responsible for enhancing $Hg^{2+}$ removal: one is iodate (or periodate), another is phosphate. The iodate (or periodate-- the two could not be differentiated with the IC analysis) are present in the FGD wastewater at ppm level. Phosphate is also existed in low ppm level. In a continuous-flow test, when the synthetic wastewater (spiked with 150 ppb $Hg^{2+}$) is spiked with 5 ppm iodate and 5 ppm phosphate, we observed significant improvement of Hg removal: the dissolved Hg in the treated effluent was lowered from > 15 ppb without iodate/phosphate additive to about 0.7 ppb with iodate/phosphate additive.

The presence of both iodate and phosphate in the raw FGD water during the field demonstration may be the main contributing factor for achieving a 99.99% Hg reduction. From our previous batch tests, we demonstrate that iodate or periodate could be rapidly reduced to iodide in a zero-valent iron system. Therefore, the true effective constituent that enhances Hg removal could be iodide through formation of mercury iodide minerals. More tests are now undergoing to further investigate Hg removal mechanism in the presence of extremely complex constituent matrix in real FGD wastewater. Other factors such as trace amount of various metal ions (e.g., Al3+) could contribute to enhanced Hg removal through complex co-precipitation process in the presence of high concentration of FeOx in the Hybrid ZVI reactors.

Potential Solutions to Improve Hg Removal of Hybrid ZVI System are as follows. Solution 1 is Adding trace amount of Iodate/Periodate/iodide into the reactor to improve Hg removal in the ZVI process. Solution 2 is adding trace amount of phosphate into the reactor to improve Hg removal in the ZVI process. Solution 3 is adding sulfide constituents into the reactor to improve Hg removal in the ZVI process. Solution 1 and 2 can be easily accomplished by using soluble iodide or phosphate salts. Solution 3 can be accomplished by the use of organosulfide as additive to the ZVI reactor. A standalone Sulfide Generator is an Alternative Solution.

Removing toxic metal through sulfide-metal chemistry is desirable in consideration of the characteristics of the Hybrid ZVI reactor. First, the hybrid ZVI reactor could provide an anaerobic and neural pH environment where sulfide ion could play a dedicated role in precipitating mercury and other toxic metals. Although sulfide could be precipitated by ferrous iron, most of toxic metal sulfide has a much lower solubility than that of FeS. For example, FeS has a solubility constant of $K_{sp}=8x10^{-19}$; in comparison, HgS has a solubility constant of $2x10^{-53}$ and CuS of $8\times10^{-37}$. As such in the co-presences of these metal ions, sulfide could first be used to form less soluble precipitate like HgS. Once formed, tracer amounts of mental sulfides could be assimilated and encapsulated in the bulk of FeOx, which will drive the continued reduction of Hg and other toxic metals through the treatment trains.

To exploit the metal sulfide chemistry with the Hybrid ZVI/FeOx/Fe(II) system, different methods were tried.

First method. Additive solid.

This method involves adding FeS (or FeS2) into the reactor as part of reactive solid to provide adsorption and precipitation sites for mercury.

This approach was evaluated in continuous flow reactor tests. We found that addition of 30 g of FeS (and FeS2 in a second test) into the mixture of 500 g $ZVI/Fe_3O_4/Fe(II)$ only improve mercury removal slightly compared to the ones without adding FeS. The less-than-expected removal improvement is probably attributable to the fact that the ZVI reactor is operated at near neutral pH and thus the dissolution of FeS is negligible. In addition, in the presence of substantial dissolved Fe(II) and continued precipitation of Fe(II) to form FeOx, any reactive FeS surface suitable for $Hg^{2+}$ adsorption and precipitation might be quickly occupied by fresh Fe(II) precipitation. Therefore, unless we operated the reactor under acidified condition (e.g., pH < 4), adding FeS in a solid powder form will not be able to significantly improve Hg (or other toxic metals) removal. For a multi-stage Hybrid ZVI/FeOx/Fe(II) reactor, it is feasible that the first stage reactor could be operated under acidic condition (feeding adequate HCl) that the added HCl could be consumed to dissolve both Fe0 and FeS and produce $Fe^{2+}$ and $S^{2-}$. The produced $Fe^{2+}$ and $S^{2-}$ could be used in the second (and subsequent) stage reactors where the operating condition could resemble that of a typical Hybrid ZVI/FeOx/Fe(II) reactor. The disadvantage is that this modification will consume more ZVI and produce excessive $H_2S$ that may pose a safety danger or result in odor problem.

Second method. Additive reagent.

As an alternative to adding FeS to promote toxic metal sulfide precipitation, the reactive system can include a standalone sulfide generator (Figure 4) to produce small amount of sulfide ions before introducing into the reactor to precipitate toxic metals.

A sulfide generator could be a packed-bed filter column filled with FeS (or FeS2) powder (mixed with sand if necessary to improve its porosity and hydraulic conductivity). A low concentration acid is flowed through the column to dissolve FeS and steadily and gradually release a stream of acid leachate rich of sulfide ions to add into the reactor. We found that 0.005 M HCl is sufficient to dissolve FeS.

In-situ generating sulfide is easier than using $Na_2S$ salt to supply sulfide. $Na_2S$ is highly reactive, dangerous to handle, and highly unstable in atmosphere environment (react with moisture and oxygen). In contrast, FeS is relatively stable under typical environment. The gradual dissolution of FeS by low concentration of acid can be relatively safely handled.

Figure 4 show a flow-chart of the hybrid ZVI/FeOx/Fe(II) prototype treatment system incorporated a sulfide generator to improve mercury removal. Referring to Figure 4, toxic metals were removed as wastewater cascaded through four reactors in series. Sulfide was introduced in to Reactor 1. $Fe^{2+}$ was added to Reactor 1, 2, and 3. Lime was added to Aerating Basin.

Preliminary results

Experimental Set-up: hybrid ZVI/FeOx/Fe(II) in two stages (R1 and R2), each 6.0 L effective reactive volume; Sulfide generator: 1 in internal diameter x 8 in height glass column, filled with 20 g FeS mixed with 75 mL silica sand (grain diameter 0.25-0.42 mm). Sulfide leachate is introduced into R1.

Operating conditions: Wastewater feed solution: simulated wastewater made of tap water spiked with 200 ppb $Hg^{2+}$; Flow rate: 16.7 mL/min (or 1 liter per hour); equivalent reaction time = 6 hr for each stage reactor (12 hr in total);

Sulfur generator feed: 5 mM HCl; flow rate: 0.3 mL/min; estimated $S^{2-}$ (including $H_2S$ and $HS^-$) in the leachate = 80 mg/L. Equivalent dose per liter wastewater = 1.5 mg/L; $Fe^{2+}$ feed: 0.5 mM.

Results:

When sulfide generator was operated to add 1.5 mg $S^{2-}$ per 1 liter wastewater, $Hg^{2+}$ concentration in effluent of R1 was below detection limit (0.1 ppb) of AAS-hydride generation method. That is, 99.95% Hg removal could be achieved in a single stage within 6 hr reaction time. Based on our preliminary test, it appears that such high removal was achieved almost instantly in the reactor. A reaction time of 6 hr is not essential. Note that the actual Hg concentration in the effluent might be substantially lower than 0.1 ppb.

In the absence of sulfide generator, dissolved Hg concentration was about 20 ppb in the effluent of R1 and >10 ppb in the effluent of R2. That is, the hybrid ZVI/FeOx/Fe(II) can only remove about 90% dissolved mercury. The poor additional Hg removal suggests that extending reaction time and stages would not significantly improve Hg removal.

A small amount of sulfide (in this test, 1.5 mg/L) is sufficient for greatly improving Hg removal. The presence of significant concentration of $Fe^{2+}$ does not impede the function of sulfide. The small amount of sulfide docs not interfere with reactivity of ZVI in term of selenate reduction.

During the test, there is no noticeable $H_2S$ bad smell in the R1. The added sulfide is fully consumed (or fixed) in the reactor.

**Comparative Example 4. Treatment of fluid streams containing dissolved silica.**

A bench scale prototype system with an effective volume of 20 liters was built. Laboratory and field continuous flow tests were conducted for four months. The system treated 40 liters water of high dissolved silica. Both artificially composited water and real industrial water were tested. The results demonstrated that the present reactive system could efficiently reduce dissolved silica in water from 230 mg/L (as $SiO_2$) to below 10 mg/L. It was observed that iron corrosion products accounted for up to 80% of 200 g/L of reactive solid in the reactor. The reactor operated at substantially neutral pH. Conditions included ambient temperature and atmospheric pressure. The process produced limited solid waste.

Removal efficiency

A single stage reactor demonstrated high removal efficiency. In particular, over 90% of dissolved silica was removed. In a field demonstration for treating flue gas desulfurization wastewater, a single stage reactive system, with one reactor, consistently reduced dissolved silica from about 70 mg/L as $SiO_2$ to below 4.0 mg/L within 6 hours. In treating artificially composited water, the single stage reactor can reduce dissolved silica from about 250 mg/L to below 10 mg/L.

In a two stage reactive system, with the first reactor the same as in the one stage system, in the field demonstration for treating flue gas desulfurization wastewater, after passing a second reactor, dissolved silica in the wastewater was further reduced to below 1.0 mg/L.

Materials consumption

Removal of dissolved silica will consume only about 0.5 mg zero valent iron and 0.3 mg ferrous iron for each 1 mg of dissolved silica.

pH

Removal was achieved in experiments between pH 7 and 8. Therefore the process will require no significant pH adjustment to the water of most industrial applications. This avoids the use of chemicals for increasing pH in pretreatment of a liquid stream before silica removal. Further, it avoids non-neutral pH driven precipitation of Ca and Mg ions that account for much of excessive waste solids when they are present in treated water.

Temperature

The experiments giving high removal efficiency were conducted at ambient temperature. Ambient temperature is typically 22 °C, but it will be understood by one of ordinary skill in the art that ambient temperature may be within a range near that typical value.

Energy

The experiments used a motorized stirrer to provide adequate (not intensive) mixing between the composite solids and water.

Liquid Stream Composition

The process was effective for removing dissolved silica from various water qualities and compositional matrices. For example, high total dissolved salts (including $Na^+$, $Ca^{2+}$, $Mg^{2+}$, $Cl^-$, $SO4^-$, and $HCO^{3-}$ ions) up to 20,0000 mg/L was found to barely affect the overall removal efficiency of the system in experiments. Organic matters (such as sugar and acetate) in the water up to 2,000 mg/L did not affect the dissolved silica removed by the process.

Field Testing within a Waste Treatment Process

The high efficiency and reliability of waste treatment process incorporating dissolved silica removal was demonstrated in a five-week field test conducted with a multi-stage four reactor, 30-liter prototype system. The prototype accepted raw FGD wastewater, reduced all major pollutants of concern and produced a high-quality effluent. Reactor 1 alone removed over 95% of dissolved silica, from about 70 ppm to below 5 ppm. Reduction of dissolved silica by Reactor 1 aided the function of the other reactors. The multi-stage prototype consistently reduced total Selenium, which existed mainly as selenate ion, from about 3,000 $\mu$g/L to < 7 $\mu$g/L. Total mercury was reduced from about 50 $\mu$g/L to <0.005 $\mu$g/L. Nitrate was reduced from about 25 mg/L to < 0.2 mg/L. In addition, Arsenic, Lead, Cadmium, Chromium and Vanadium were all reduced to sub-ppb level.

The waste treatment process uses inexpensive chemicals and produces limited amount of solid waste. The expendable chemical cost for treating 1 $m^3$ of the FGD wastewater is estimated to be less than $0.5. Leaching tests (following the USEPA TCLP method) was conducted to determine the toxicity of the resultant solid waste. The leachate was found to contain < 0.1 mg/L of total Se, < 0.2 $\mu$g/L of total Hg and < 0.1 $\mu$g/L of total As, all of which are well below the regulatory limits. The preliminary results suggest that the solid waste could be treated as non-hazardous waste.

**Example 5. Field Demonstration of a Hybrid ZVI/FeOx Reactive System for Treating the FGD Wastewater**

Overview

This example illustrates that the present technology is adapted to help industries to meet stringent effluent regulations for toxic metals.

The wet scrubber is becoming more popular as an effective technology for flue gas desulfurization in coal-fired electric power industry. While wet scrubbers can significantly reduce air pollution, wet scrubbers produce waste liquid streams that are laden with various toxic metals including mercury and selenium of various forms.

The field demonstration described in this example illustrates that the present technology provides a high-performing, cost-effective, and reliable technology that is capable of treating flue gas desulfurization (FGD) wastewater to comply with rigorous discharge regulations on toxic metals. For example, the results met a desired reduction level for selenium and mercury of: total Se < 50 ppb and total Hg < 12 ppt, respectively.

The field demonstration permitted evaluation of the effectiveness of an exemplary Hybrid ZVI/FeOx chemical treatment process for removing toxic metals in the wastewater generated from the flue gas desulfurization processes of coal-fired power plants. The main target pollutants in the field demonstration were dissolved selenium (Se) and mercury (Hg) in the FGD wastewater. Further, the field demonstration permitted evaluations of removal of other contaminants of concern including various trace toxic metals such as arsenic (As), lead (Pb), cadmium (Cd), chromium (Cr), nickel (Ni), vanadium (V), and zinc (Zn); nutrients such as nitrate and phosphate; and boron (B).

General apparatus, materials, and methods

The field demonstration described in this example used a Hybrid ZVI/FeOx treatment system, exemplary of the treatment system shown in Figure 3. The integrated Hybrid ZVI/FeOx treatment system employed the reactivity of elemental iron to create a highly reactive solid mixture of zero-valent iron particles and a special type of iron oxide for chemical transformation and mineralization of most toxic metals in water. The hybrid system was particularly effective for removing hexavalent selenium. This process employed a special mechanism to reverse the loss of chemical reactivity of zero-valent iron powder due to the formation of passive corrosion coatings on the zero-valent iron surface. The process featured a reactor design adapted to promote and direct the reactive power of the iron corrosion process toward cleaning up various harmful constituents in impaired water. The system was designed to minimize wasteful consumption of zero-valent iron power and thus significantly reduce waste sludge production.

The treatment system included reactor units and post-treatment units. A four-stage continuously stirred tank reactor (CSTR) reactive unit (similarly to Figures 2, with four stages, rather than three), with sequential CSTR stages termed R1, R2, R3, and R4, was used in this field test. Dissolved Se, Hg and other toxic metals and contaminants were transformed and removed in the reactors. The post-treatment consists of aeration + final clarification + rapid sand filtration, which was used to remove the residual dissolved iron and the suspended solids.

The combined effective volume of four reactors is 30 liters. The effective volumes of R1-R4 are 9.0, 9.0, 6.0 and 6.0 liters, respectively. The influent (FGD wastewater) and chemical reagent solutions were delivered by peristaltic pumps (Masterflex pumps, Cole-Palmer). The mixing in each reactor was provided by an overhead motorized stirrer. Aeration was provided by a small aeration pump (purchased from a Wal-Mart store, for household aquarium use).

Three main chemicals used are zero-valent iron, Reagent B, and Reagent C

- ZVI: The zero-valent iron powder used in this test was consisted of various sizes (5-50 microns) and shapes of fine particles (Figure 4). The surface of ZVI powder is covered with rust. The purity of $Fe^0$ is about 95%, with impurities consisted of about 3.5-4.5% carbon, max.1.5% silicon, max. 2.5% oxygen. The specific surface area of iron powder (BET surface) was measured as 1.5 $m^2/g$.
- Reagent B to the reactor: Surface regeneration solution is an acidified $FeSO_4$ solution (75 mM $Fe^{2+}$ and 3 mM HCl).

  - Reagent C to the aereating basin: Solution of 150 mM $NaHCO_3$ and 150 mM $Na_2CO_3$.

The field test lasted for five weeks. The first week was the start-up period, during which the treatment system was optimized and stabilized. At the beginning of the start-up, 400 g fresh ZVI was added to each reactor. To ease and accelerate the start-up at the field site, the iron powders had been pre-conditioned for one week in to modify their surface composition and enhance their surface reactivity. The partially started-up reactors were sent to field site for use. After the treatment system was re-assembled the first-week's effort involved mainly adjusting flow rates of Reagent B and C to optimize system performance. The flow rate of Reagent B was adjusted between 0.1 and 0.4 L/d. Flow rate of Reagent C was adjusted between 0.2 and 0.6 L/d.

After the start-up (Week 1), the treatment system was operated without major accidents or problems. In Week 2, the main outlet of Reactor 1 was clogged, resulting in overflow of unknown amount of the reactive solids from Reactor 1 into Reactor 2. The outlet was cleaned up and the tubing was replaced to restore normal effluent flow. Since the accident caused no significant changes in the overall system performance, no additional measurement was taken to compensate the loss of reactive solid in reactor 1. The accident in the second week inevitably complicated efforts to estimate ZVI consumption rates in Reactor 1 and 2. A power outage of lasting unknown period might also occur during the weekend of second week. The treatment system was operated under more normal conditions during the final three three weeks.

Throughout five week test period, raw FGD wastewater was fed at a constant rate of 30 liter/day (or 1.25 liter/hr). The corresponding hydraulic retention time was about 24 hr. During Week 2 to Week 5, reagent B was pumped at an equal flow rate of 0.3 L/day into each of Reactor 1, 2 and 3. Reagent B was used to maintain reactivity of zero-valent iron and to produce secondary, highly reactive species for removal of toxic metals. Reactor 4 did not receive Reagent B. Reagent C was pumped at a flow rate of 0.5 L/day into the aeration basin. Reagent C was used to neutralize and precipitate the residual dissolved $Fe^{2+}$ in the effluent from reactors.

The prototype system was used to treat raw FGD wastewater that was pretreated only with settling in an equalization tank. A 250 liter tank was used as a feeding tank to store raw FGD wastewater for use of one week. In total, five tanks of wastewater were used. Raw FGD wastewater has an initial pH of 6.7. The pH was slightly increased to about 7.1 to 7.3 by adding $NaHCO_3$ at an amount of 0.06 g/L. The wastewater was highly brackish, containing about 20 g/L total dissolved salts.

Temperature was not controlled during the test. The operating temperature appeared to mirror the ambient temperature, which varied from standard room temperature when the windows were closed to outdoor temperature when the windows were open, which was as low as 40 F in the early morning..

Influent and effluent samples were taken twice a week on Monday and Thursday and submitted for outside analysis of toxic metals. The results from the EPA-certified outside laboratory were used to evaluate system performance in Se and Hg removal. Additional water samples were collected daily during workdays and transferred to the present inventor's laboratory for supplementary analysis. These results were mainly used to monitor the status of the system and adjust its operation. The present inventor's laboratory also analyzed and characterized iron oxide samples.

Results

Removal of contaminants

The performance for removal of contaminants was evaluated. Table 2 provides summary results for removal of selected contaminants in treating high-strength raw FGD wastewater.

Table 2:

| Pollutants | Influent (as total metal) | Effluent | Removal Efficiency |
|---|---|---|---|
| *Selenium* | 1910 2950 ppb | Total Se < 7 ppb | >99.8% |
| *Mercury* | 22 to 61 ppb | Total Hg < 0.005 ppb | >99.99% |
| *Arsenic* | 6.4 to 10.6 ppb | Total As < 0.3 ppb | >97% |
| *Cadmium* | 45 to 73 ppb | Total Cd < 0.3 ppb | >99% |
| *Chromium* | 25 to 55 ppb | Total Cr < 0.6 ppb | >98% |
| *Nickel* | 231 to 266 ppb | Total Ni < 7.0 ppb | >97% |
| *Lead* | 3.3 ppb | Total Pb < 0.08 ppb | >97% |
| *Zinc* | 901 to 1350 ppb | Total Zn < 2.0 ppb | >99.8% |
| *Vanadium* | 17 to 23 ppb | Total V < 0.15 ppb | >99.8% |
| *Nitrate* | 30 ppm Nitrate-N | Nitrate-N < 0.2 ppm | >99% |

Removal of specific contaminants is described below.

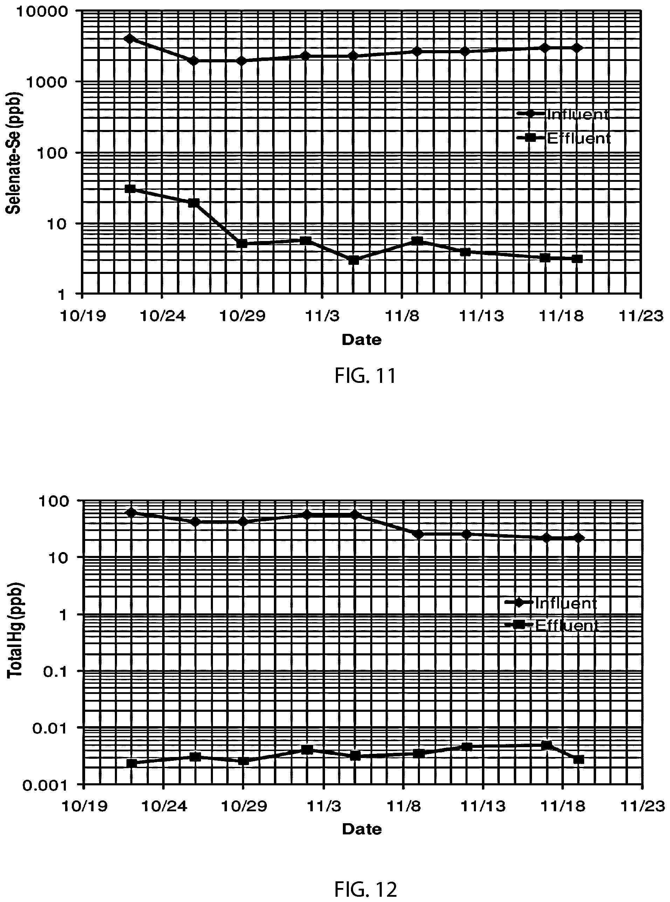

Selenium. The treatment system was proven to be capable of effectively removing dissolved selenium in form of selenate at ppm level (Figure 11). Removal of selenate is considered the main technical challenge for FGD wastewater treatment. During the entire test period, total selenium in the final effluent had never been higher than 50 ppb. In fact, total selenium in the final effluent was consistently below 10 ppb once the system was successfully started-up. The effluent from Reactor 2 contained less then 25 ppb, which means that over 99% selenate-Se had been removed by the first two stages. For selenium removal, stages 3 and 4 appeared to be redundant, which means that the treatment time of 24 hr could be significantly shortened. The results demonstrate that the technology can meet the targeted treatment standard (total Se <50ppb) anticipated by the industry and governments.

Mercury. The treatment system achieved a remarkable Hg removal efficiency, consistently reducing Hg from tens of parts per billion to below 0.01 ppb. During the entire test period (including the start-up stage), total Hg in the effluent was never above 0.005 ppb (Figure 12). The treatment could meet the most stringent wastewater discharge standard for Hg (i.e., 0.012 ppb). Analysis indicated that total Hg was reduced to below 0.1 ppb in the effluent of Reactor 1, which means that over 99.9% total Hg was removed in the first stage. The results suggest that the reaction time for reducing total Hg to below 0.0012 ppb could be significantly less than 24 hr.

Various other toxic metals. The results confirmed that this treatment system could effectively remove a broad spectrum of toxic metals including Arsenic, Cadmium, Chromium, Nickel, Lead, Zinc, and Vanadium. The treatment system consistently removed over 97% of these metals.

Copper. Dissolve $Cu^{2+}$ (or $Cu^{+}$) is known to easily react with $Fe^{0}$ and be reduced to $Cu^{0}$ (solid). Previous laboratory investigation had confirmed that dissolved Cu can be easily removed by a zero-valent iron reactive system. According to outside analysis, however, Cu was the only metal that the system not only did not remove, but actually increased after treatment. This abnormality might be most likely caused by the corrosion of a copper weight block that was attached to the influent end of the reagent tubing to ensure that the intake reached to the bottom of Reagent C tank. Copper appeared to have corroded in alkaline ($Na_2CO_3$) conditions, released significant amount of dissolved cupric ions and resulted in increased level of Cu in the final effluent.

Nitrate. The ZVI reactors consistently removed over 99% of nitrate during the test. Nitrate-N was reduced from about 25 mg/L to below 0.2 mg/L. Most nitrate (>99%) had been removed by Reactor 3. The nitrate concentration in the effluent is well below 10 mg/L as N, which is the Maximum Contaminant Level for drinking water. It appears that most of nitrate was converted to ammonium. $NH_4^+$-N concentration increased from negligible to about 20 mg/L in the final effluent. As a result of this transformation, break-point chlorination would be desirable as a post-treatment process to oxidize ammonium to nitrogen gas to complete the removal of nitrogen nutrient for the FGD wastewater. Break-point chlorination is a mature and cost-effective technology that has been widely used in industry to remove low level ammonium in water/wastewater.

Dissolved silica. Dissolved silica was removed very effectively by the system. Real-time on site analysis by the present inventor confirmed that Reactor 1 alone removed over 95% of dissolved silica, from about 70 ppm to below 5 ppm. The increase of dissolved silica after Reactor 1 could be caused by dissolution of silica sand in filtration bed or redissolution of polymerized silica in Reactor 3 and 4.

Boron. Boron existed mainly as borate. Based on outside analysis, no significant amount of borate was removed during the treatment. However, previous laboratory tests suggested that the treatment system could achieve a much improved boron removal under certain conditions. For example, increasing operating pH in the reactor to near 8.0 was found to achieve a much better borate removal.

Total dissolved solids. The system didn't reduce or increase total dissolved solids in any significant scale. $Ca^{2+}$ and $Mg^{2+}$ ions in the influent passed the treatment system without much change. Limited removal of $Ca^{2+}$ and $Mg^{2+}$ are desirable because it means that $Ca^{2+}$ and $Mg^{2+}$ will not contribute to excessive solid waste production. There is an obvious increase in $Na^+$ as $NaHCO_3$ and $Na_2CO_3$ are added during the treatment.

Other impurities. Fluoride and Bromide ions are present at a level of about 10 mg/L in the influent. In the effluent, F- concentration appears to be reduced to below 5 mg/L. Phosphate in the influent was below ppm level and not detected in the treated effluent. In a ZVI/FeOx system, phosphate is expected to be completely precipitated and removed from the solution. I- was not present in the influent, but was detected at a level of a few mg/L in the treated effluent. It was likely that iodate ($IO_3^-$) and/or periodate ($IO_4^-$) ions were present in the influent. Previous laboratory tests confirmed that $IO_3^-$ and $IO_4^-$ could be converted to I- by the treatment system.

Chemicals consumed

Based on the field test results, for treating one cubic meter of high strength FGD wastewater, the system will consume: 150-250 g $Fe^0$, which costs about $1.5/kg; 200-300 g iron salt, which costs about $0.2/kg; and < 50 g CaO (lime). The total expendable chemical cost is projected to be less than $0.5 per 1 $m^3$ wastewater. For treating a 500 gpm FGD waste stream, the projected expendable chemical cost will be less than $500,000 per year.

Solid waste produced

Production of solid waste can be calculated by applying principle of mass balance. Based on the amount of chemicals added into the system and the changes of total dissolved solids in the water, it can be estimated that the system will produce 0.5-1.0 kg waste solid per 1 $m^3$ wastewater treated.

The solid waste was mainly composed of magnetite and polymerized silica. X-ray diffraction spectra of spent solid particles from the four reactors were obtained. The analyses showed that the main compositions of the solids are magnetite ($Fe_3O_4$) crystalline. TEM and EDS micrographs of the reactive solids collected in R1 at the end of test were obtained. The analyses showed that the solids mainly consist of magnetite crystalline (P2) and polymerized silica (PI). Several other forms of iron minerals like hematite, maghemite and lepidocrocite may also be present. The well crystallized magnetite and ferric oxides in general are chemically stable.

Leaching tests following the USEPA TCLP method was conducted to determine the toxicity of the resultant solid waste. The leachate was found to contain < 0.1 mg/L of total Se, < 0.2 $\mu$g/L of total Hg and < 0.1 $\mu$g/L of total As, all of which are well below the regulatory limits. TCLP hazardous limits are 1.0 mg/L for total selenium, 0.2 mg/L for total Hg, and 5.0 mg/L for total As. Concentration of other toxic metals (lead, zinc, etc.) in the leachate has not been analyzed. The preliminary results suggest that the solid waste could be treated as non-hazardous waste.

Speciation of Se was analyzed in the solid waste by the present inventor's laboratory. It was found that elemental selenium accounts for about 60% and selenide for about 40% of total selenium in the solid waste. Thus, results demonstrate that soluble selenate was removed from liquid phase through chemical reduction by ZVI to become insoluble elemental selenium and FeSe.

The present inventor contemplates that solid wastes may come from several sources. A first source is iron oxides formed through a corrosion reaction of ZVI. The corrosion reaction may involve one or more of reduction of nitrate, reduction of dissolved oxygen (carried over in the influent or aeration through open liquid surface in the reactors), reduction of water, and reduction of other oxyanions such as iodate. A second source is polymerization and precipitation of dissolved silica (possibly in association with FeOx). A third source is iron oxides formed through precipitation and oxidation of externally added $Fe^{2+}$. A fourth source is $CaCO_3$ precipitate formed when $Na_2CO_3$ (or CaO) is used to provide alkalinity and maintain pH.

Discussion

Most of nitrate and selenate reduction had been removed in the first and second reactor. Most of toxic metals could have been removed in Reactor 1. In this field test, Reactor 3 and 4 appeared to operate in an idle mode, receiving negligible pollutants from upstream. It could be inferred from this result that hydraulic retention time could be significantly shortened in future tests; e.g., from 24 hrs to 12 hrs. Reagent B added into Reactor 3 was wasted. By the present inventor's estimate, consumption of Reagent B could be halved. In fact, during the start-up stage Reagent B was once provided at a rate of about 0.15 L/d per reactor for two days; the results showed that the system still achieved well acceptable performance.

The system was operated at a rather conservative mode due to the lack of in-situ monitoring measure. The strategy was also used to reduce the maintenance need and improve flexibility and adaptability of the system in handling variable wastewater qualities. Under operation with in-situ, real-time, monitoring and automation, consumption of chemicals and other operating controls could be further optimized.

The example illustrates that the present technology offers many competitive advantages to industry. In particular, simplicity, reliability and efficiency are advantages of the present technology. More particularly, eight advantages of the present process for removing a contaminant from an aqueous stream arc simplicity, versatility, robustness, low initial capital cost, low operating cost, limited maintenance, limited sludge production, and minimization of risky byproducts. With respect to simplicity, the present process requires no complicated and expensive pretreatments or post-treatments, and it accepts raw wastewater and produces dischargeable effluent in a single integral process. With respect to versatility, the present process removes most toxic metals and metalloids from various industrial waste streams. With respect to robustness, the present process is less susceptible to temperature variation and water quality disturbance and is suitable for treating water with high salts and dissolved organic matter. With respect to low initial capital cost, the present process does not require expensive equipment. With respect to low operating cost, the present process uses common, inexpensive, nontoxic substances (zero-valent iron and iron salts). For example, the expendable material operating cost will be less than $0.5 per cubic meter for treating highly polluted and complicated FGD wastewater. With respect to limited maintenance, the present process facilitates process monitoring and adjustment with standard sensors and operational controls. With respect to limited sludge production, the present process operates at near-neutral pH, which reduces chemical consumption and limits sludge production. With respect to minimization of risky byproducts, the present process involves little chance of forming extremely toxic organic mercury (or selenium) compounds.

Although the invention has been described with reference to specific embodiments, these descriptions are not meant to be construed in a limiting sense.

**Claims**

1.  A method for removing selenate from an aqueous fluid, the method comprising:

    providing a fluidized bed reactor (110) comprising a reactive solid (122) in the form of a plurality of particles and a secondary reagent (126);
    contacting the reactive solid (122) and the secondary reagent (126) with the aqueous fluid, thereby reducing the selenate to an insoluble selenium species;
    wherein the reactive solid (122) particles comprise:

    a core including primarily zero valent iron; and
    a shell including primarily magnetite;

    wherein the reactive solid (122) is made by a method comprising:

    oxidising a portion of zero valent iron so as to produce an iron corrosion product; and
    exposing the iron corrosion product to the secondary reagent (126) so as to produce the reactive solid (122) comprising the remaining zero valent iron and magnetite;

    wherein the secondary reagent (126) is ferrous iron, which is added as dissolved ferrous iron, and appropriate aqueous chemical conditions are maintained so as to facilitate the formation and maintenance of the magnetite, so that the reactivity of the zero valent iron can be sustained.

2.  The method of Claim 1, wherein the fluidized bed reactor (110) comprises an internal settling zone (114) and a fluidized reactive zone (112),
    wherein the fluidized reactive zone (112) serves as the main reactive space where the particles of the reactive solid (122) are completely mixed with the aqueous fluid and the secondary reagent (126), and
    wherein the internal settling zone (114) is towards the top of the reactor (110) and is equipped with means for removing an effluent (125) from the top region of the internal settling zone (114) and with an inlet (115) at the bottom of the internal settling zone (114), so as to be in communication with the fluidized reactive zone (112), the internal settling zone (114) thus allowing the particles to separate from water and to be retained in the fluidized reactive zone (112).

**3.** The method of Claim 1, wherein the aqueous fluid is flue gas desulfurization wastewater.

**Patentansprüche**

**1.** Verfahren zur Entfernung von Selenat aus einem wässrigen Fluid, wobei das Verfahren Folgendes umfasst:

Bereitstellen eines Wirbelschichtreaktors (110), umfassend einen reaktionsfähigen Feststoff (122) in der Form einer Vielzahl von Partikeln und ein sekundäres Reagenz (126);
Inkontaktbringen des reaktionsfähigen Feststoffs (122) und des sekundären Reagenzes (126) mit dem wässrigen Fluid, zum Reduzieren des Selenats zu einer unlöslichen Selenspezies auf diese Weise;
wobei der reaktionsfähige Feststoff (122) Partikel wie folgt umfasst:

einen Kern, der primär nullwertiges Eisen einschließt; und
eine Schale, die primär Magnetit einschließt;

wobei der reaktionsfähige Feststoff (122) mittels eines Verfahrens hergestellt wird, umfassend:

Oxidieren eines Anteils von nullwertigem Eisen zum Produzieren eines Eisenkorrosionsprodukts auf diese Weise; und
Aussetzen des Eisenkorrosionsprodukts dem sekundären Reagenz (126) zum Produzieren des reaktionsfähigen Feststoffs (122) auf diese Weise, umfassend das restliche nullwertige Eisen und Magnetit;

wobei das sekundäre Reagenz (126) zweiwertiges Eisen ist, das als aufgelöstes zweiwertiges Eisen zugefügt wird, und angemessene wässrige chemische Bedingungen aufrechterhalten werden, zum Fördern der Bildung und Aufrechterhaltung des Magnetits auf diese Weise, damit die Reaktionsfähigkeit des nullwertigen Eisens unterhalten werden kann.

**2.** Verfahren nach Anspruch 1, wobei der Wirbelschichtreaktor (110) eine innere Absetzzone (114) und eine Wirbelschichtreaktionszone (112) umfasst,
wobei die Wirbelschichtreaktionszone (112) als der Hauptreaktionsraum dient, in dem die Partikel des reaktionsfähigen Feststoffs (122) mit dem wässrigen Fluid und dem sekundären Reagenz (126) vollständig gemischt werden, und
wobei sich die innere Absetzzone (114) nahe dem oberen Ende des Reaktors (110) befindet und mit Mitteln zum Entfernen eines Ablaufs (125) aus der oberen Region der inneren Absetzzone (114) und mit einem Zulauf (115) am Boden der inneren Absetzzone (114) zur Kommunikation mit der Wirbelschichtreaktionszone (112) auf diese Weise ausgerüstet ist, wobei die innere Absetzzone (114) folglich das Trennen der Partikel vom Wasser und das Zurückhalten in der Wirbelschichtreaktionszone (112) zulässt.

**3.** Verfahren nach Anspruch 1, wobei das wässrige Fluid Rauchgasentschwefelungsabwasser ist.

**Revendications**

**1.** Procédé destiné à éliminer du sélénate à partir d'un fluide aqueux, le procédé comprenant :

la fourniture d'un réacteur à lit fluidisé (110) comprenant un solide réactif (122) sous la forme d'une pluralité de particules et un réactif secondaire (126) ;
la mise en contact du solide réactif (122) et du réactif secondaire (126) avec le fluide aqueux, réduisant ainsi le sélénate en une espèce de sélénium insoluble ;
dans lequel les particules de solide réactif (122) comprennent :

un noyau incluant principalement du fer zérovalent ; et
une coque incluant principalement de la magnétite ;

dans lequel le solide réactif (122) est fait par un procédé comprenant :

l'oxydation d'une partie de fer zérovalent de manière à produire un produit de corrosion du fer ; et
l'exposition du produit de corrosion du fer au réactif secondaire (126) de manière à produire le solide réactif (122) comprenant le fer zérovalent restant et de la magnétite ;

dans lequel le réactif secondaire (126) est du fer ferreux, qui est ajouté sous la forme de fer ferreux dissous, et des conditions chimiques aqueuses adaptées sont maintenues de manière à faciliter la formation et le maintien de la magnétite, de sorte que la réactivité du fer zérovalent puisse être prolongée.

2. Procédé selon la revendication 1, dans lequel le réacteur à lit fluidisé (110) comprend une zone de décantation interne (114) et une zone réactive fluidisée (112),
dans lequel la zone réactive fluidisée (112) sert d'espace réactif principal où les particules du solide réactif (122) sont complètement mélangées avec le fluide aqueux et le réactif secondaire (126), et
dans lequel la zone de décantation interne (114) se trouve vers la partie supérieure du réacteur (110) et est équipée d'un moyen destiné à éliminer un effluent (125) de la région supérieure de la zone de décantation interne, (114) et d'une entrée (115) au niveau de la partie inférieure de la zone de décantation interne (114), de manière à être en communication avec la zone réactive fluidisée (112), la zone de décantation interne (114) permettant ainsi aux particules de se séparer de l'eau et d'être retenues dans la zone réactive fluidisée (112).

3. Procédé selon la revendication 1, dans lequel le fluide aqueux est une eau usée de désulfuration de gaz de combustion.

FIG. 1

FIG. 2

FIG. 3

FIG. 4

FIG. 5

FIG. 6A

FIG. 6B

FIG. 6C

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5635073 A
- US 2009191084 A1
- US 6322701 B1
- US 61243875
- US 61243845
- US 61351194

**Non-patent literature cited in the description**

- **KANEL et al.** Environmental Science & Technology. American Chemical Society, 2005, vol. 39, 1291-1298
- **YONG et al.** *Journal of Environmental Quality,* 2003, 1306-1315
- **LIU et al.** *Journal of Hazardous Materials B136,* 2006, 706-713